**Europäisches Patentamt**

**European Patent Office**

**Office européen des brevets**

(11) Veröffentlichungsnummer: **0 400 115 B1**

# (12) EUROPÄISCHE PATENTSCHRIFT

(45) Veröffentlichungstag der Patentschrift: **14.06.95**

(51) Int. Cl.6: **B01D 21/00**, B01D 43/00, B01J 19/10

(21) Anmeldenummer: **89912372.3**

(22) Anmeldetag: **03.11.89**

(86) Internationale Anmeldenummer: **PCT/AT89/00098**

(87) Internationale Veröffentlichungsnummer: **WO 90/05008 (17.05.90 90/11)**

(54) **VERFAHREN UND EINRICHTUNG ZUR SEPARATION VON TEILCHEN.**

(30) Priorität: **03.11.88 AT 2712/88**

(43) Veröffentlichungstag der Anmeldung:
**05.12.90 Patentblatt 90/49**

(45) Bekanntmachung des Hinweises auf die
Patenterteilung:
**14.06.95 Patentblatt 95/24**

(84) Benannte Vertragsstaaten:
**AT BE CH DE FR GB IT LI LU NL SE**

(56) Entgegenhaltungen:
**EP-A- 0 059 359     EP-A- 0 173 435
WO-A-87/07178     WO-A-88/09210
DE-A- 3 027 433     US-A- 4 523 682**

(73) Patentinhaber: **BENES, Ewald
Klosterstrasse 23
A-2362 Biedermannsdorf (AT)**

Patentinhaber: **HAGER, Ferdinand
Berggasse 8/18
A-1090 Wien (AT)**

(72) Erfinder: **BENES, Ewald
Klosterstrasse 23
A-2362 Biedermannsdorf (AT)**
Erfinder: **HAGER, Ferdinand
Berggasse 8/18
A-1090 Wien (AT)**

(74) Vertreter: **Babeluk, Michael, Dipl.-Ing. et al
Patentanwalt
Albertgasse 10/8
A-1080 Wien (AT)**

**Beschreibung**

Die Erfindung betrifft ein Verfahren zur Separation von Teilchen welche in einem Dispersionsmittel dispergiert sind, bei dem in einem die Dispersion aufnehmenden Gefäß eine stehende Ultraschallwelle, deren Frequenz vorzugsweise in der Umgebung der charakteristischen Frequenz $f_0$ liegt, von einem zusammengesetzten Resonator erzeugt wird. Der Begriff Dispersion wird hier als Überbegriff für die verschiedenen Arten disperser Systeme verwendet. Darunter versteht man ein aus zwei (oder mehreren) Phasen bestehendes System, bei dem die disperse Phase in der anderen, die als Dispersionsmittel bezeichnet wird, fein verteilt ist.

Während die Erfindung auf alle Teilchenarten (feste, flüssige oder gasförmige disperse Phase) anwendbar ist, besteht beim Dispersionsmittel eine Beschränkung auf Flüssigkeiten oder Gase. Die Anwendung umfaßt hiemit sowohl feste (Suspensionen), flüssige (Emulsionen) und gasförmige Teilchen in Flüssigkeiten, als auch feste (Rauch) und flüssige Partikel (Nebel) in Gasen. Die Flüssigkeit kann dabei selbstverständlich auch eine Schmelze sein. Die größten Anwendungsgebiete sind die Hydrosole (Teilchen in Wasser) und Aerosole (Teilchen in Luft).

Eine Ausfällung von dispergierten Teilchen im großtechnischen Maßstab wurde bisher durch sog. Flotation oder durch Zusatz von sog. Flockungsmitteln erzielt. Die Flotation ist auf relativ schwere Teilchen beschränkt, die Flockungsmittel bedingen eine chemische Belastung der Dispersion und sind daher insbesondere für die Trinkwasseraufbereitung problematisch.

Während die dispergierende und kolloidchemische Wirkung von Ultraschall bzw. die Ultraschallreinigung bereits weit verbreitete technische Anwendung findet, ist die koagulierende Wirkung des Ultraschalls vorwiegend aus Lehrbüchern bekannt. Aus E. SKUDRZYK, "Die Grundlagen der Akustik", Springer Verlag, Wien, 1954, S.202-205, S.807-825; L. BERGMANN, "Der Ultraschall und seine Anwendung in Wissenschaft und Technik", Verlag Hirzel, Zürich, 1954; sowie K. ASAI und N. SASAKI, Tagungsbericht zum 3. Internationalen Kongress für Steinkohlenaufbereitung, Institut National de L'industrie Charbonniere, Brüssel-Lüttich, 1958, "Schlammaufbereitung durch Ultraschall" folgt, daß die, bei der Beschallung anzuwendende, Frequenz am besten von der Größenordnung der sog. charakteristischen Frequenz $f_o$ gewählt wird, die sich aus

$$f_O = \frac{3}{2\pi} \frac{\bar{\eta}}{r^2} = 0{,}4775 \frac{\bar{\eta}}{r^2} \qquad [1]$$

errechnet, wobei

$$\bar{\eta} = \frac{\eta}{\rho} \qquad [2]$$

die kinematische Viskosität, $\eta$ die dynamische Viskosität, $\rho$ die Dichte des Dispersionsmittels, und r den Radius des Teilchens bezeichnet. Für Frequenzen oberhalb $f_o$ ist die innere Reibung praktisch bedeutungslos, für Frequenzen unterhalb wird sie bestimmend.

Die charakteristische Frequenz bestimmt auch den sog. Mitführungskoeffizienten, es ist dies das Verhältnis aus den Schnelleamplituden des Teilchens und des Dispersionsmittels. In der Umgebung der charakteristischen Frequenz beginnt das Teilchen eine merkbar geringere Auslenkung als die Moleküle des Dispersionsmittels aufzuweisen; mit zunehmender Überschreitung der charakteristischen Frequenz wird das Teilchen von den Schallschwingungen immer weniger mitgenommen. Da die sog. hydrodynamischen Kräfte bzw. die Bernoullikräfte, die einen wesentlichen Beitrag zur Zusammenballung der Teilchen innerhalb der Schallschnelleknoten- bzw. Schallschnellebauchbereiche liefern, direkt vom Auftreten einer Relativbewegung zwischen Teilchen und Dispersionsmittel abhängen, ist es normalerweise günstig, die Anregungsfrequenz größer als die charakteristische Frequenz zu wählen. Dabei bringt aber eine Erhöhung der Frequenz über das zehnfache der charakteristischen Frequenz praktisch keine Erhöhung der Relativbewegung mehr, da dann die Teilchenauslenkung bezogen auf die Schallamplitude im Dispersionsmittel einem Grenzwert zustrebt. Dieser hängt vom Dichteverhältnis $\rho'/\rho$ zwischen Teilchen und Dispersionsmittel ab und wird außerdem für einen kleinen Wert (z.B. Luftbläschen in Wasser) von $\rho'/\rho$ später (bei ca. $10f_o$) und für einen sehr großen Wert (z.B. Mineralstoffe oder Metallstaub in Wasser) früher (bei ca. $0{,}3f_o$) erreicht. Aus der einschlägigen Literatur folgt hiermit, daß die Beschallungsfrequenz innerhalb des Bereiches $0{,}3f_o$ bis $10f_o$ zu wählen ist, wenn man die hydrodynamischen bzw. die Bernoullikräfte für die Koagulation nützen möchte. Für die Größe der Schallstrahlungskräfte, die die Teilchen in Extrembereiche (Knoten- bzw. Bauchbereiche) der Schallschnelle treiben, ist die Beschallungsfrequenz hingegen von untergeordneter Bedeutung. Die entscheidende Größe ist hierfür der sog. Dichtekompressibilitätsfaktor, der vom Verhältnis der Kompressionsmoduli der Teilchen und des Dispersionsmittels abhängt. Ist der Dichtekompressibilitätsfaktor positiv, werden die Teilchen in die Schnellebäuche gedrängt, ist er negativ, werden sie in die Schnelleknoten getrieben. Bei Nullwerden des Dichtekompressibilitätsfaktor verschwinden auch die Schallstrahlungskräfte. Bei der überwiegenden Mehrzahl der Hydrosole werden die Teilchen in die Schnellebäuche getrieben.

Es wurden bereits in der Vergangenheit große Anstrengungen unternommen, um diese Methodik effektiv und dadurch industriell anwendbar zu machen. Ein Beispiel einer technischen Ausführung wird in der US-A-4,055,491 gezeigt, in welchem die dispergierten Partikel in einer stehenden Ultraschallwelle zur Flockung gebracht werden, um anschließend während einer Phase abgeschalteter Ultraschallenergie durch die Schwerkraft abgesetzt zu werden. Obwohl dadurch die Absetzrate der Partikel gegenüber der natürlichen Sedimentation zweifellos erhöht werden kann, ist dieses Verfahren doch sehr langsam und dadurch für große Durchsatzmengen ungeeignet. Überdies braucht nicht betont zu werden, daß dieses Verfahren wohl bevorzugt für den diskontinuierlichen Betrieb geeignet ist und daher für viele Anwendungsbereiche nicht einsetzbar ist.

Eine weitere Ausführungsform wird in der US-A-4,398,925 zur Entfernung von Gasblasen aus Flüssigkeiten gezeigt, bei der zu Beginn eine erste stehende Ultraschallwelle so erzeugt wird, daß sich in dem Flüssigkeitsbehälter genau ein Schallschnelleextrembereich in der Mitte des Behälters ausbildet, in dem sich die Gasblasen ansammeln und zur Koagulation gebracht werden. Anschließend wird die Erzeugung der Ultraschallwelle unterbrochen, wodurch die durch Koagulation vergrößerten Gasblasen auf Grund des Auftriebes beginnen langsam aufzusteigen. Nachdem sie den Bereich des Schallschnellextremums verlassen haben, wird eine zweite stehende Ultraschallwelle mit einer solcherart erhöhten Frequenz erzeugt, daß nun zwei Schallschnelleextrembereiche entstehen. Die sich im Aufsteigen befindlichen Gasblasen werden jetzt gezwungen, sich zu dem ihnen nächstgelegenen Extrembereich, also dem oberen, hinzubewegen. Diese Vorgangsweise kann nun mit ständig steigender Frequenz so oft wiederholt werden, bis sich die Gasblasen an der Oberfläche des Flüssigkeitsbades auflösen. Es wird betont, daß sich dieser Prozeß auf das Vorhandensein einer nichtakustischen Kraft, der Auftriebskraft, stützt, die während einer Phase abgeschalteter Ultraschallenergie auf die Gasblasen wirkt. Nur dadurch kann vermieden werden, daß sich die Blasen in mehrere Teilbereiche der Schallschnelleextrema aufspalten und damit eine gerichtete, großräumige Separation verhindert wird. Außerdem ist auch dieser Prozeß durch die ständig notwendige Unterbrechung der Beschallung äußerst langsam. Auch braucht nicht betont zu werden, daß dieses Verfahren für den Durchflußbetrieb nicht geeignet ist.

Die Anwendung stehender Ultraschallwellen wird auch zur Separartion von Partikeln verschiedener akustischer Eigenschaften herangezogen, wie dies in den US-A-4,280,823 und US-A-4,523,682 gezeigt ist. Dabei wird die Tatsache ausgenützt, daß auf verschiedenartige Partikel (Unterschiede in der Dichte, Schallgeschwindigkeit, Größe, ...) verschieden starke akustische Kräfte wirken. Der Nachteil dieser Verfahren besteht auch hier darin, daß zur erfolgreichen Separation eine weitere nichtakustische Kraft - wie die Schwerkraft oder die Reibungskraft - unbedingt erforderlich ist. Weiters bauen beide Patente darauf auf, daß ständig und überall konstante akustische Verhältnisse herrschen, eine Forderung, die in der Praxis, bedingt durch Interferenzerscheinungen, ungleichmäßiges Schwingverhalten der Schallerzeugerelemente, Temperatur-, Strömungs- und andere Effekte, kaum realisierbar ist.

Die Gemeinsamkeit der bisher beschriebenen Verfahren liegt darin, daß sie zwar mikroskopische Bereiche (die Schallschnellebauchbereiche bzw. -Knotenbereiche) erhöhter Teilchenkonzentration erzeugen, eine wirkliche makroskopische, das heißt sich über Abmessungen von mehreren Wellenlängen erstreckende, Trennung jedoch nur unter Zuhilfenahme einer nichtakustischen Kraft, meist der Schwerkraft, erreichen, wodurch sich diese Verfahren als sehr langsam erweisen.

In den Ausführungsvarianten GB-A-2,098,498 und US-A-4,673,512 wird deshalb versucht, eine relative Bewegung der Bereiche, in denen sich die Partikel in einer stehenden Ultraschallwelle ansammeln, zu erzeugen. Diese Bewegung kommt dadurch zustande, daß man eine erste laufende Ultraschallwelle in einer Richtung aussendet und mit einer zweiten laufenden Ultraschallwelle gleicher Frequenz, die sich in der entgegengesetzten Richtung ausbreitet und durch eine sich bezüglich der ersten Welle stetig verändernde Phasenlage unterscheidet, überlagert. Das Ergebnis dieser Überlagerung ist eine driftende stehende Welle mit sich bewegenden Bereichen der Schallschnelleextrema. Durchströmt eine Dispersion diesen Bereich der driftenden stehenden Welle, werden die dispergierten Partikel mit den Extrembereichen mehr oder weniger gut - in Abhängigkeit ihrer akustischen Eigenschaften - mitbewegt und der erwünschte Separationseffekt wird erzielt. Der große Nachteil der beiden Patente besteht in der Tatsche, daß die Separationsleistung nur sehr gering sein kann, da die Erzeugung einer driftenden stehenden Welle durch stetige Phasenveränderung zweier sich in entgegengesetzter Richtung ausbreitender laufender Ultraschallwellen nicht im Resonanzzustand erfolgen kann. Dies führt zu äußerst kleinen akustischen Kräften (bis zu einem Faktor $10^6$ kleiner als im Resonanzbetrieb), wodurch die Separationsleistung sehr stark vermindert bzw. enorme elektrische Antriebsleistungen benötigt werden und dadurch die industrielle Anwendbarkeit sehr eingeschränkt wird.

In der WO-A-88 09 210 wird die Verwendung einer herkömmlichen stehenden Welle zur Flockung, Fällung, Agglomeration oder Koagulation von in einer Flüssigkeit dispergierten Partikel gezeigt, wobei im Gegensatz zu US-A-4,055,491 auch ein Durchflußbetrieb vorgesehen ist. Beiden gemeinsam ist jedoch die nachteilige Forderung der Agglomeration oder Koagulation der dispergierten Partikel zu größeren Teilchen, um diese dadurch von der Schwerkraft in akzeptablen Zeiträumen absetzbar zu machen. Die Notwendigkeit der Koagulation bedingt hohe Einwirkzeiten der Schallenergie und daher äußerst kleine Durchflußraten. In einer weiteren Ausführungsform der WO-A-88 09 210 wird auch hier die Erzeugung einer driftenden stehenden Welle - durch Überlagerung zweier entgegengesetzt laufender Wellen gleicher Frequenz aber mit sich stetig verändernder Phasenlage - zur Koagulation der Partikel herangezogen, womit, wie schon erwähnt, grundsätzlich der Verzicht auf den Resonanzbetrieb mit den bekannten nachteiligen Folgen, verbunden ist.

Auch in US-A-4,759,775 wird versucht eine Bewegung und Separation der dispergierten Teilchen mit Hilfe einer driftenden stehenden Welle zu erzeugen. Im Gegensatz zu den oben beschriebenen Dokumenten GB-A-2,098,498, US-A-4,673,512 und WO-A-88 09 210 wird hier die Driftbewegung nicht durch Phasenverschiebung zweier entgegengesetzt laufender Wellen gleicher Frequenz realisiert, sondern mit Hilfe zweier anderer Verfahrensvarianten.

Eine erste Methode sieht vor, diese Driftbewegung durch Überlagerung zweier in entgegengesetzter Richtung laufender Wellen mit leicht unterschiedlicher Frequenz zu bewirken. Die Erzeugung des Frequenzunterschiedes wird entweder unter Ausnützung des akustischen Dopplereffektes durch kontinuierliche Bewegung des Reflektors erzielt, oder dadurch, daß man zwei Schallerzeugereinheiten verwendet, die zwei laufende Wellen leicht unterschiedlicher Frequenz in entgegengesetzter Richtung aussenden.

Eine zweite Methode sieht vor, einen Schallerzeuger derart anzuregen, daß man die Ansteuerfrequenz kontinuierlich zwischen zwei Grenzfrequenzen erhöht oder vermindert und anschließend auf die Anfangsfrequenz zurückspringt. Diese beiden Prozeßschritte werden nun ständig wiederholt. Durch Überlagerung dieser sich in einer Richtung ausbreitenden und in der Frequenz stetig verändernden Welle mit der an einem fixierten akustischen Spiegel in entgegengesetzter Richtung reflektierten Welle entsteht, bedingt durch den Laufzeitunterschied zwischen Schallerzeuger und Reflektor, eine driftende stehende Welle.

Beiden Methoden gemeinsam ist die für die Effizienz als Verfahren entscheidende Einschränkung, daß auch hier die Erzeugung der driftenden stehenden Welle nur unter Verzicht auf den Resonanzbetrieb - mit den schon oben beschriebenen Nachteilen - möglich ist

In einer letzten Ausführungsform der US-A-4,759,775 wird versucht, durch Synchronisierung einer kontinuierlichen Frequenzverschiebung der ausgestrahlten Welle mit einer gleichzeitigen Bewegung des Reflektors, keine driftende stehende Welle, sondern eine wahre stehende Welle zu erzeugen. Dabei wird die Frequenzänderung der auf den Reflektor auftreffenden Welle auf Grund des Dopplereffektes, der durch die Bewegung des Reflektors hervorgerufen wird, kompensiert. Die Anzahl der Wellenlängen bleibt dabei konstant, nur die Wellenlänge selbst und dadurch die Gesamtlänge der beschallten Strecke wird verändert. Der Nachteil dieses Verfahrens liegt aber darin, daß der gewünschte Separationseffekt nicht erreicht wird, da die in den Schnellebauchflächen festgehaltenen Teilchen über den ganzen Volumsbereich verteilt bleiben und hiemit keine großvolumige Trennung von Teilchen und Disperisonsmittel eintritt. Außerdem ist eine exakte Synchronisierung der nötigen Reflektorbewegung mit der entsprechenden Frequenzänderung nur schwer realisierbar und dadurch die notwendige Bedingung zur Aufrechterhaltung des energetisch günstigen Resonanzzustandes kaum aufrechtzuerhalten. Auch hier ist ein kontinuierlicher Durchflußbetrieb nur schwer vorstellbar, da während der notwendigen Rückstellphase des Reflektors in seine Ausgangsposition die Erzeugung der Schallwelle - und damit der Durchfluß - unterbrochen werden muß.

Aufgabe der Erfindung ist es, ein Verfahren zu schaffen, das diese Nachteile vermeidet und eine möglichst effiziente und vollständige Trennung der dispergierten Teilchen vom Dispersionsmittel oder eine Trennung unterschiedlicher Teilchen ermöglicht.

Erfindungsgemäß wird dies dadurch erreicht, daß die im Schallfeld auftretenden Amplituden V der Schallschnelle geringfügig kleiner als die obere Grenzamplitude $V_{max}$ gewählt werden, bei der die Staukräfte auf die dispergierten Teilchen, die durch die von der Beschallung erzeugte akustische Strömung des Dispersionsmittels entstehen, gleich den Längshaltekräften der dispergierten Teilchen in den Schnellebauch- bzw. Schnelleknotenbereichen sind, und daß die Frequenz, mit der der zusammengesetzte Resonator angetrieben wird, möglichst genau auf eine der Resonanzfrequenzen $f_n$ abgestimmt wird. Bei Anwendung einer ebenen stehenden Welle haben die Schnellebauch- bzw. Schnelleknotenbereiche die Form von Ebenen.

4

Die Ermittlung der oberen Grenzamplitude erfolgt am einfachsten dadurch, daß die Amplitude der elektrischen Anregungsspannung solange erhöht wird, bis die akustische Strömung die, von den Schallstrahlungskräften in den Schnellebauch- bzw. Schnelleknotenbereichen zusammengetriebenen, Teilchen mitreißt. Dies erfolgt schlagartig und läßt sich in der Regel optisch - allenfalls unter Zuhilfenahme einer Lupe oder eines Mikroskops - gut erkennen. Auch die Überwachung des optischen Transmissionsfaktors der Dispersion in Richtung parallel zu den Schnellebauch- bzw. Schnelleknotenbereichen liefert ein klares Kriterium für das Erreichen der Grenzamplitude (plötzliche, signifikante Verringerung des Transmissionsfaktors) und damit die Möglichkeit der Regelung der Schallschnelleamplitude auf den erfindungsgemäßen Wert. In jenen Fällen, in denen eine optische Kontrolle nicht möglich ist (bei transparenten Teilchen die sich im Brechungsindex nicht vom Dispersionsmittel unterscheiden), kann die Kontrolle durch Bestimmung der Abscheidungsausbeute in Abhängigkeit von der Größe der elektrischen Anregungsspannung erfolgen. Die Abscheidungsausbeute steigt zunächst mit zunehmender Anregungsspannung um bei Überschreiten von $V_{max}$ plötzlich wieder auf einen verschwindenden Wert abzusinken. Die Bestimmung der Abscheidungsausbeute kann z.B. durch Wägung der abgeschiedenen Teilchen erfolgen.

Bei sehr geringen Teilchenkonzentrationen können die in den Schallschnelleknoten- bzw. Bauchflächen zusammengetriebenen Teilchen noch immer einen so großen Abstand aufweisen, daß keine Zusammenballung zu größeren Teilchen möglich ist. Gemäß einem weiteren Merkmal der Erfindung können durch eine zweidimensionale Beschallung zwei stehende Wellenfelder erzeugt werden, die zueinander einen Winkel einschließen, der bevorzugt ein rechter Winkel ist, wodurch die Teilchen durch die Längskräfte in die Schnittlinien der Schnellebauch- bzw. Schnelleknotenflächen getrieben und dort festgehalten werden. Dadurch ergeben sich auch bei geringen Teilchenkonzentrationen im Volumen für eine Koagulation ausreichende Konzentrationen in den Schallknotenlinien bzw. -Bauchlinien. Bei dieser Anordnung können die Anregungsfrequenzen in den beiden Dimensionen unterschiedlich gewählt werden. Dies ist besonders bei unterschiedlichen Teilchengrößen, zu denen gemäß Gl.[1] stark unterschiedliche charakteristische Frequenzen gehören, vorteilhaft.

Bei besonders geringen Teilchenkonzentrationen, bzw. bei sehr unterschiedlichen Teilchengrößen kann jene Variante der Erfindung vorteilhaft werden, bei der drei stehende Wellenfelder erzeugt werden, die zueinander Winkel einschließen, die bevorzugt rechte Winkel sind, wodurch die Teilchen durch die Längskräfte in die Schnittpunkte der Schnellebauch- bzw. Schnelleknotenflächen getrieben und dort festgehalten werden.

Zur weiteren Konzentration der Teilchen innerhalb der Schnellebauch- bzw. Schnelleknotenbereiche bzw. zum Festhalten der Teilchen auch in Querrichtung normal zu den Längshaltekräften sieht die Erfindung vor, daß durch Ausbildung ausgeprägter Gradienten der Schnelleamplitude innerhalb der Schnellebauch- bzw. Schnelleknotenflächen, bzw. innerhalb der Schnittlinien der Schnellebauch- bzw. Schnelleknotenflächen, Querkräfte auf die Teilchen erzeugt werden, welche in Richtung steigender Amplitude weisen. Dadurch halten sie die Teilchen in jenen Zonen der Schnellebauch- bzw. Schnelleknotenflächen, bzw. der Schnittlinien derselben, fest, in denen die Schnelleamplitude relative örtliche Maxima aufweist.

Vorzugsweise ist vorgesehen, daß die Ausbildung ausgeprägter Gradienten der Schnelleamplitude V innerhalb der Schnellebauchbereiche bzw. Schnelleknotenbereiche durch eine abwechselnde Aufeinanderfolge von Zonen mit konstruktiver und Zonen mit destruktiver Interferenz erzeugt wird. Auf diese Weise wird erreicht, daß die Amplituden der Schallschnelle zwischen relativen örtlichen Maximal- und Minimalwerten variieren.

Wenn sich das Schallfeld in Bezug auf den Behälter in Ruhe befindet, besteht noch der Nachteil, daß die Teilchen zwar in Schnelleknoten- bzw. Schnellebauchbereichen konzentriert werden, eine makroskopische Entmischung (wegen der sehr geringen Abstände der Schnelleknoten- bzw. Bauchbereiche von typischerweise weit unter einem mm) damit aber noch keineswegs erreicht ist. Die bisherigen Maßnahmen sind nur dann zielführend, wenn es sich um Teilchen handelt, die zu hinreichend großen Konglomeraten koagulieren, die dann von der Schwerkraft ausgefällt werden können. Die Ausfallung durch die Schwerkraft dauert aber jedenfalls sehr lange, was eine lange Beschallungsdauer pro Volumseinheit und damit einen hohen Energieverbrauch zur Folge hat. Nach einem besonders wichtigen Merkmal der Erfindung ist daher vorgesehen, daß das, sich bei der Betriebsresonanzfrequenz im Behälter einstellende stehende Schallfeld relativ zum Behälter verschoben wird. Bei geeigneter Ausbildung des Schallfeldes werden die Teilchen gewissermaßen in einer Art akustischer Flasche festgehalten. Die genannten Nachteile werden durch Bewegung der akustischen Flasche und damit der Teilchen, relativ zum Dispersionsbehälter, überwunden. Dadurch wird eine rasche makroskopische Separation der dispergierten Teilchen vom Dispersionsmittel erreicht. Die hiefür notwendige relative Verschiebung kann bevorzugt normal zur Ausbreitungsrichtung oder in Ausbreitungsrichtung der Welle erfolgen, wobei letzteres einen besonders raschen Trennvorgang ermöglicht.

Weiters betrifft die Erfindung Einrichtungen zur Durchführung des Verfahrens nach Anspruch 1, zur Separation dispergierter Teilchen durch Beschallung der Dispersion mit stehenden Ultraschallwellen in einem zusammengesetzten Resonator, der eine Beschallungseinrichtung enthält, die aus mindestens einem elektrisch mit einer Frequenz in der Umgebung der charakteristischen Frequenz angetriebenen, mechanisch schwingfähigen Element besteht und die akustisch mit einem die Dispersion enthaltenden Behälter gekoppelt ist, der ein aus einem oder mehreren akustischen Spiegeln aufgebautes akustisches Spiegelsystem aufweist, welches die Schallwellen reflektiert, wodurch sich stehende Schallwellen ausbilden können, die auf die dispergierten Teilchen Schallstrahlungskräfte in Längsrichtung der stehenden Wellen erzeugen, welche die Teilchen in die Schnellebauchbereiche bzw. Schnelleknotenbereiche des stehenden Schallfeldes treiben und dort festhalten und mit Mitteln zur Einstellung der elektrischen Antriebsfrequenz des Resonators.

Diese Einrichtungen sind durch die kennzeichnenden Merkmale der jeweiligen unabhängigen Ansprüche 12, 15 bzw. 31 charakterisiert.

Insbesondere bei niedrigen Teilchenkonzentrationen ist eine Ausführungsvariante der Erfindung vorteilhaft, bei der die Verwendung von zwei oder drei Beschallungseinrichtungen vorgesehen ist, die zueinander annähernd einen rechten Winkel einschließen. Die dabei sich ausbildenden Schallschnellebauch- und -Knotenbereiche haben ein kleineres Volumen, wodurch eine wesentlich höhere Aufkonzentration der Teilchen in diesen Bereichen erzielt wird

Weiters sieht die Erfindung vor, die akustischen Spiegel durch eine Platte mit planparallelen Oberflächen aus einem, im Vergleich zur Dispersion, möglichst schallharten Material zu realisieren, wobei die Dicke der Platte vorzugsweise gleich einem Viertel oder gleich einem ungeradzahligen Vielfachen von einem Viertel der Wellenlänge $(2n+1)\lambda/4$ in der Platte gewählt wird.

Vorzugsweise wird die Reflexion der akustischen Welle um 180° durch ein Spiegelsystem realisiert, dessen einzelne Spiegelflächen zueinander einen rechten Winkel einschließen. Dadurch wird bewirkt, daß die auf den Spiegel auftreffende Welle nicht in das Reflektormaterial eindringen und damit keine Energieverluste hervorrufen kann, sofern der Winkel zwischen einfallender Welle und Reflektoroberfläche sowohl den Grenzwinkel für Totalreflexion der Longitudinalwellen $\Theta_l$ als auch den Grenzwinkel für Totalreflexion der Scherwellen $\Theta_s$

$$\Theta_l = \arc \sin \frac{c_{fl}}{c_l}\,, \qquad\qquad \Theta_s = \arc \sin \frac{c_{fl}}{c_s} \qquad\qquad [3]$$

$c_{fl}$    Schallgeschwindigkeit in der Dispersion
$c_l$    Schallgeschwindigkeit der Longitudinalwelle im Reflektormaterial
$c_s$    Schallgeschwindigkeit der Scherwelle im Reflektormaterial

übersteigt. Weiters wird durch die rechtwinkelige Anordnung der Reflektoren bewirkt, daß die Weglänge für alle auftreffenden Strahlen nach Reflexion an zwei oder mehreren Reflektoren unabhängig vom Auftreffpunkt auf den ersten Reflektor dieselbe bleibt, wodurch die erforderliche Phasenkonstanz der akustischen Welle während der Reflexion garantiert wird. Vorzugsweise wird der Winkel zwischen einfallendem Strahl und Spiegeloberfläche mit 45° gewählt. Für diesen Winkel werden die in Formel [3] genannten Bedingungen für die Grenzwinkel für Totalreflexion von den meisten Festkörpern, insbesondere von Metallen wie Aluminium und Eisen, erfüllt.

Insbesondere sieht die Erfindung vor, daß die akustischen Spiegel gleichzeitig die Funktion von Behälterwänden übernehmen oder Teile der Behälterwände bilden.

Eine zweidimensionale Beschallung läßt sich erfindungsgemäß auch durch eine einzige Beschallungseinrichtung erreichen, die eine Schallwelle in einer ersten Richtung aussendet, welche über ein akustisches Spiegelsystem Schallwellen erzeugt, die bevorzugt einen Winkel von 90° zur ersten Richtung einschließen.

Die Erfindung umfaßt auch besonders wirksame Maßnahmen, die zur Ausbildung einer definiert ausgeprägten säulenartigen Struktur der Teilchensammelbereiche führen. Dies kann einem Merkmal der Erfindung gemäß durch die Ausbildung einer abwechselnden Aufeinanderfolge von Zonen mit konstruktiver und Zonen mit destruktiver Interferenz durch Einfügen einer Phasenplatte erfolgen, die bevorzugt senkrecht zur Längsrichtung der stehenden Welle angeordnet ist, wobei die Phasenplatte unterschiedlich dicke Bereiche aufweist und die Dickenabmessungen $d_1$ und $d_2$ der Bereiche sich um einen Betrag unterscheiden, der eine Phasendifferenz der, diese unterschiedlich dicken Bereiche durchlaufenden, Wellen von etwa $\pi/4$ oder einem ungeradzahligen Vielfachen von $\pi/4$ bewirkt und wobei die kleinere Dickenabmessung $d_1$ bevorzugt gleich einem Viertel oder einem ganzzahligen Vielfachen von einem Viertel der Wellenlänge in der Platte ist. Die Dickenvariation muß dabei nicht sprunghaft erfolgen. Die Phasenplatte kann entweder in die Dispersion eingebettet, oder eine als akustischer Spiegel wirkende Gefäßwand oder ein Teil davon sein.

Eine definiert ausgeprägte säulenartigen Struktur der Teilchensammelbereiche kann auch einem weiteren Merkmal der Erfindung gemäß durch die Ausbildung von Gradienten der Schnelleamplitude V innerhalb der Schnellebauch- bzw. Schnelleknotenbereiche erzielt werden, die durch eine Beschallungseinrichtung erfolgen, deren örtlicher Amplitudenverlauf in Querrichtung relative Minima und Maxima aufweist.

Es kann insbesondere vorgesehen sein, daß das elektrisch anregbare, mechanisch schwingfähige Element ein piezoelektrischer Resonator ist. Damit wird eine problemlose Beschallung der Dispersion ermöglicht. Besonders geeignet sind dabei Piezokeramikmaterialien mit hoher wirksamer Piezokonstante, wie z. B. Bleizirkonat-Titanat Die einfachste Möglichkeit ist die Verwendung eines scheibenförmigen piezoelektrischen Resonators mit planparallelen Scheibenflächen (planparalleler Resonator). Typische Scheibendicken sind 1-3 mm, der Scheibendurchmesser reicht üblicherweise von 10 mm bis 10 cm. Auch rechteckige Scheiben sind handelsüblich und für die erfindungsgemäße Einrichtung geeignet. Bessere säulenförmige Konzentrationen der stehenden Schallwellen können durch Verwendung vieler, relativ kleiner scheibenförmiger piezoelektrischer Resonatoren mit jeweils einer planen und einer konvex gekrümmten Scheibenfläche (plankonvexer Resonator) erreicht werden.

Eine besonders gute Ausprägung periodischer Schnellegradienten in Querrichtung erhält man durch Betreiben des piezoelektrischen Resonators auf einer anharmonischen Resonanzfrequenz. Während bei einer harmonischen Resonanzfrequenz alle Punkte der Scheibenoberfläche in Phase schwingen, ist bei den anharmonischen Resonanzfrequenzen die Auslenkung einzelner Teilbereiche gegenphasig. Der Begriff "anharmonische Resonanzfrequenz" wird hier im Sinne der Publikation von S. HERTL, E. BENES, L. WIMMER, M. SCHMID, Proc. of the 39th Annual Frequency Control Symposium, pp. 535-543, Philadelphia, USA, 1985, "Investigation of quartz crystal thickness shear and twist modes using a new noninterferometric laser speckle measurement method" verwendet.

Normalerweise handelt es sich bei anharmonischen Schwingungsmoden um unerwünschte Nebenresonanzen zur jeweiligen harmonischen Resonanzfrequenz (Grund- oder Oberwelle). Die elektrische Anregbarkeit der anharmonischen Resonanzfrequenz kann gemäß einem weiteren Merkmal der Erfindung durch Aufspaltung der Elektrodenflächen in Teilflächen erhöht werden, wobei die Lage und die Größe der Teilflächen so gewählt wird, daß sie mit der Lage und der Größe der schwingenden Bereiche der gewünschten anharmonischen Schwingungsmode übereinstimmen und die elektrische Anspeisung der zu gegenphasig schwingenden Bereichen gehörigen Elektroden elektrisch gegenphasig erfolgt.

Um einen kontinuierlichen Betrieb zu ermöglichen, kann vorgesehen sein, daß der Behälter eine Zutrittsöffnung, durch die die zu behandelnde Dispersion einströmen kann, und eine Austrittsöffnung, durch die das Dispersionsmittel ausströmen kann, besitzt, und die Dispersion den Behälter im wesentlichen normal zur Längsrichtung durchströmt wodurch die Teilchen in den Schnellebauchbereichen bzw. Schnelleknotenbereichen festgehalten und angereichert werden.

Bei hohen Teilchenkonzentrationen bzw. langer Durchflußdauer ist es vorteilhaft, periodisch wiederkehrend die elektrische Anregung der Resonanz jeweils solange zu unterbrechen, bis die in den Schnellebauchbereichen bzw. Schnelleknotenbereichen koagulierten Teilchen durch die Schwerkraft ausgefällt sind.

Bei hoher Strömungsgeschwindigkeit ist es zweckmäßig, während der Dauer der Unterbrechung der elektrischen Anregung die Durchströmung ebenfalls zu unterbrechen.

Zur Realisierung der Relativbewegung zwischen akustischer Flasche und Dispersionsbehälter in Querrichtung kann vorgesehen sein, die Beschallungseinrichtung langsam in Querrichtung relativ zum Behälter zu verschieben. Die akustische Kopplung zwischen Beschallungseinrichtung und Behälter erfolgt dabei vorteilhaft über einen Flüssigkeitsfilm, dessen Dicke wesentlich kleiner als ein Viertel der Wellenlänge im Flüssigkeitsfilm bei der Betriebsfrequenz $f_n$ ist. Der Flüssigkeitsfilm zur akustischen Kopplung der Phasenplatte mit einer Gefäßwand dient gleichzeitig als Schmiermittel und besteht z.B. aus einem niedrigviskosen Silikonöl oder aus Wasser mit einem Netzmittel; die Dicke des Flüssigkeitsfilms $d_F$ soll so klein als möglich eingestellt werden, jedenfalls aber wesentlich kleiner als einem Viertel der Wellenlänge in diesem Filmmaterial entspricht. Bei einer Betriebsresonanzfrequenz von 2 MHz und der Verwendung von Wasser ergibt sich damit für $d_F \ll 0{,}19$ mm.

Ein weiteres Merkmal der Erfindung ist die Feinabstimmung der elektrischen Antriebsfrequenz der Beschallungseinrichtung auf eine Resonanzfrequenz des zusammengesetzten Resonators. Dies kann entweder eine natürliche Resonanzfrequenz, bei der die Leistungsaufnahme der Beschallungseinrichtung ein relatives Maximum aufweist, eine Serien-Resonanzfrequenz, bei der bei einer im Vergleich zur Resonatorimpedanz niederohmigen Anspeisung die Stromaufnahme der Beschallungseinrichtung ein relatives Maximum aufweist, oder eine Parallel-Resonanzfrequenz des zusammengesetzten Resonators, bei der bei extrem hochohmiger Anspeisung die an der Beschallungseinrichtung anliegende elektrische Spannung ein relatives Maximum aufweist, sein. Vorteilhaft ist dabei die Feinabstimmung auf das relative Maximum durch automatische Regelung der elektrischen Antriebsfrequenz auf dieses relative Maximum. Auf besonders einfache Weise wird dies durch Einbeziehung der an den elektrischen Anschlüssen der Beschallungseinrichtung auftretenden elektrischen Impedanz als amplituden- und phasenbestimmendes Bandpaß-Filterelement in den Rückkopplungskreis einer Oszillatorschaltung erreicht. Die Oszillatorschaltung kann auch eine Regeleinrichtung der Amplitude der sich bei der Betriebsresonanzfrequenz einstellenden Spannung oder der sich einstellenden Stromaufnahme an den elektrischen Anschlüssen der Beschallungseinrichtung enthalten. Im ersteren Fall wird bei Parallelresonanz, im letzteren Fall bei Serienresonanz eine von der Dampfung durch die Dispersion unabhängig eingeprägte Amplitude der Schallschnelle in der Dispersion erreicht.

Zur Realisierung der Relativbewegung zwischen akustischer Flasche und Dispersionsbehälter in Längsrichtung der Schallwelle kann vorgesehen sein, daß der die Dispersion enthaltende Behälter akustisch transparente Wände (reflexionsfreie Wände) besitzt und dieser Behälter relativ zum Schallfeld verschoben wird, welches in einem weiteren, eine Kopplungsflüssigkeit enthaltenden, Behälter erzeugt wird. Hiefür ist es zweckmäßig, daß die akustisch transparenten Wände eine Wandstärke von einer halben oder einem ganzzahligen Vielfachen einer halben Wellenlänge im Wandmaterial bei der Betriebsfrequenz $f_n$ aufweisen. Bei der Verwendung von Plexiglas als Wandmaterial ergibt sich bei $f_n$ = 2 MHz für $4\lambda/2$ eine Wandstarke von 2,7 mm. Der Anteil störender Reflexionen kann auch durch Ausführung der akustisch transparenten Wände aus einem Material erfolgen, dessen Schallkennimpedanz $z_W$ sich möglichst wenig von der Schallkennimpedanz $z_D$ der Dispersion unterscheidet. Dies ist z.B. beim Dispersionsmittel Wasser für die Wandmaterialien Teflon® und Polyäthylen hinreichend erfüllt.

Zur Erzielung einer großvolumigen Separation von Teilchen und Dispersionsmittel, das heißt zur Erzielung eines teilchenfreien Bereiches der sich über möglichst viele Wellenlängen erstreckt, ist es gemäß einem besonders wichtigen Merkmal der Erfindung vorgesehen, daß der zusammengesetzte Resonator in Längsrichtung in einen oder mehrere Separationsbereiche und in einen oder mehrere Wellenleiterbereiche unterteilt ist, mittels einer elektronischen Schaltung die Antriebsfrequenz des zusammengesetzten Resonators von einer minimalen Resonanzfrequenz $f_{min}$ ausgehend schrittweise von einer Resonanzfrequenz $f_n$ zur jeweils nächsten Resonanzfrequenz $f_{n+1}$ erhöht wild bis eine maximale Resonanzfrequenz $f_{max}$ erreicht ist; innerhalb einer Totzeit $t_T$, die sehr klein gegenüber der Einwirkungsdauer $\Delta t_n$ der jeweiligen Frequenz $f_n$ ist, wieder auf die Ausgangsfrequenz $f_{min}$ zurückgeschältet wird; der Vorgang zyklisch wiederholt wird und die Lage und die Länge $d_S$ jedes Separationsbereiches innerhalb der Gesamtlänge L des zusammengesetzten Resonators derart gewählt wird, daß für jeden beliebigen Frequenzschritt $f_n \rightarrow f_{n+1}$ die größte innerhalb des Separationsbereiches auftretende Verschiebung $\delta$ eines Schallschnellebauchbereiches stets kleiner als ein Viertel, bevorzugt ein Sechstel der jeweiligen Ausgangswellenlänge $\lambda_n$ ist und die zum gesamten Frequenzhub $f_{max}$-$f_{min}$ zugehörige größte innerhalb des Separationsbereiches auftretende Verschiebung $\Delta$ eines Schallschnellebauchbereiches größer als ein Viertel der mittleren Wellenlänge $\lambda_{max}/4$ ist. Entsprechendes gilt für eine schrittweise Erniedrigung der Antriebsfrequenz.

Eine gute Ausnützung des für den Separationseffekt verwendbaren Volumens ergibt die Vorsehung von zwei, bevorzugt symmetrisch zur Symmetrieachse angeordneten, Separationsbereichen und von drei Wellenleiterbereichen, wovon ein Wellenleiterbereich in der Mitte zwischen den Separationsbereichen liegt und die beiden anderen Wellenleiterbereiche an den Enden des zusammengesetzten Resonators angeordnet sind.

Dabei erhält man höhere Gütewerte (Reziprokwerte der Dämpfung) für den zusammengesetzten Resonator, wenn die Beschallungseinheit im mittleren Wellenleiterbereich enthalten ist oder diesen bildet.

Um auf die erforderliche akustische Länge des mittleren Wellenleiterbereiches bei gleichzeitig hoher Gesamtgüte zu kommen, wird der Wellenleiterbereich durch einen bevorzugt aus dem Disperisonsmittel bestehenden Flüssigkeitsbereich, der mit akustisch transparenten Wänden abgeschlossen ist, realisiert.

Aus dem gleichen Grund werden die an den Enden angeordneten Wellenleiterbereiche aus je einem bevorzugt aus dem Dispersionsmittel bestehenden Flüssigkeitsbereich gebildet, der am innenliegenden Ende durch eine akustisch transparente Wand und am außenliegenden Ende durch einen akustischen Spiegel abgeschlossen ist.

Die akustisch transparenten (reflexionsfreien) Wände werden dabei durch Platten mit einer Wandstärke von einer halben oder, wie dies zur Vermeidung von Durchbiegungen notwendig sein kann, einem ganzzahligen Vielfachen einer halben Wellenlänge $\lambda_G/2$ im Wandmaterial bei der mittleren Betriebsfrequenz $f_m$ realisiert.

Die angestrebte Reflexionsfreiheit kann dabei über einen größeren Frequenzbereich aufrechterhalten werden, wenn die akustisch transparenten Wände aus einem Material gefertigt sind, dessen Schallkennimpedanz $z_W$ sich möglichst wenig von der Schallkennimpedanz $z_D$ der Dispersion unterscheidet.

Aus Festigkeits- und Preisgründen ist es bei großen Anlagen wichtig, die akustisch transparenten Wände aus einem inneren Wandmaterial (z. B. rostfreier Stahl) beliebiger Stärke anfertigen zu können. Dies wird dadurch erreicht, daß die Schallkennimpedanz $z_W$ des Wandmaterials auf der der Dispersion zugewandten Seite über eine unmittelbar anschließende λ/4-Transformationsschicht an die Schallkennimpedanz $z_D$ der Dispersion angepaßt wird, während sie auf der der Kopplungsflüssigkeit zugewandten Seite über eine unmittelbar anschließende λ/4-Transformationsschicht an die Schallkennimpedanz $z_K$ der Kopplungsflüssigkeit angepaßt wird (vgl. Gl.[6]).

Besonders gute Ergebnisse wurden mit Abmessungsverhältnissen erzielt, bei denen die akustische Länge $d_{Wa}$ des mittleren Wellenleiterbereiches ungefähr gleich einem Drittel der akustischen Länge des zusammengesetzten Resonators ist.

Für den Fall der steigenden Antriebsfrequenz können die an den Enden angeordneten Wellenleiterbereiche im einfachsten Fall nur durch die als akustische Spiegel ausgebildeten Behälterwände selbst aufgebaut sein (verschwindende Länge $d_{Wa}$ der äußeren Wellenleiter). Damit läßt sich das Dispersionsmittel mit hohem Reinigungsgrad separieren, die Aufkonzentration der Teilchen in der angereicherten Dispersion ist jedoch gering. Wenn eine hohe Aufkonzentration erreicht werden soll, müssen die außenliegenden Wellenleiterbereiche länger (z. B.: gleich dem Separationsbereich bzw. gleich einem Sechstel der Gesamtresonatorlänge) gewählt werden.

Für den Fall der fallenden Antriebsfrequenz kann der mittlere Wellenleiterbereich im einfachsten Fall in analoger Weise nur nur durch die Beschallungseinrichung selbst gebildet werden.

Zur Erzielung einer hohen Gesamtresonatorgüte ist es wichtig, daß die Ausgangsresonanzfrequenz $f_{min}$ kleiner und die maximale Frequenz $f_{max}$ größer als eine Resonanzfrequenz $f_K$ der Beschallungseinrichtung gewählt wird. Dabei wird unter Resonanzfrequenz $f_K$ der Beschallungseinrichtung eine Resonanzfrequenz (meist Grundwellenanregung oder 3. Oberwelle) in Luft oder in Vakuum als Umgebungsmedium verstanden. Typische Werte für $f_K$ liegen um 2 MHz, die mittlere Resonanzfrequenz $f_m$ wird zweckmäßig gleich diesem Wert gewählt, die Größe eines Frequenzschrittes (Abstand zweier benachbarter Resonanzfrequenzen des zusammengesetzten Resonators ($f_n - f_{n+1}$) beträgt dann typischerweise 7 kHz. Dieser Frequenzschritt bleibt natürlich nicht konstant, sondern ändert sich geringfügig entsprechend einer geomtrischen Reihe:

$$\frac{f_{n+1}}{f_n} = \frac{n+1}{1} \qquad . \qquad\qquad\qquad\qquad [5]$$

Dadurch ist die Realisierung z. B. mit einer sog. PLL (Phase Locked Loop)-Schaltung in besonders einfacher Weise möglich.

Es wird darauf hingewiesen, daß hier unter den Längenabmessungen immer die im Sinne der Erfindung relevanten akustischen Längen (Vielfache von halben Wellenlängen in den jeweiligen Medien) verstanden werden.

Für den Großtechnisch besonders wichtigen Durchflußbetrieb ist vorgesehen, daß die Separationsbereiche im wesentlichen normal zur Wellenausbreitungsrichtung von der Dispersion durchströmt werden. Dabei ist es wichtig die Strömungsgeschwindigkeit so zu wählen, daß die Verweilzeit der Dispersion im beschallten Separationsbereich größer als die Periodendauer des zeitlichen Verlaufs der Antriebsfrequenz f ist.

Eine kontinuierliche Verschiebung der Schnellebauchbereiche und damit eine noch höhere Separationsgeschwindigkeit kann durch eine weitere Ausführungsvariante der Erfindung erzielt werden, bei der der zusammengesetzte Resonator als Ringresonator ausgebildet wird, der mindestens eine Beschallungseinrichtung enthält. Bei diesem Ringresonator wird die akustische Welle ähnlich wie bei einem Ringlaser durch ein Spiegelsystem ringförmig in sich reflektiert und es kommt wie bei den stehenden Wellen zu einer Resonanzüberhöhung der Schnelleamplitude in der umlaufenden Welle für Frequenzen, bei denen die gesamte akustische Weglänge entlang des Ringumfanges ein ganzzähliges Vielfaches der halben Wellenlänge beträgt. Das Spiegelsystem wird dabei vorteilhaft so ausgelegt, daß die einzelnen Spiegelflächen den Bedingungen für Totalreflexion der jeweils auftreffenden Welle genügen, das heißt, das die Grenzwinkel für Totalreflexion für Longitudinal- und Scherwellen, entsprechend Gl.[3], kleiner sind als der Winkel der einfallenden Welle. Dies kann durch Wahl eines Reflektormaterials mit geeigneter Schallgeschwindigkeit erreicht werden. Die Umlaufgeschwindigkeit der Welle ist gleich der Schallgeschwindigkeit. Durch diese Resonanz-Ringwelle werden auf die dispergierten Teilchen in Umlaufrichtung der Ringwelle gleichförmige Kräfte ausgeübt, die allerdings sehr gering sind. Vorteilhaft wird der Ringresonator so ausgebildet, daß er eine oder mehrere Beschallungseinrichtungen enthält, die sowohl eine erste Resonanz-Ringwelle der Frequenz $f_1$ erzeugen, als auch eine zweite Resonanz-Ringwelle der Frequenz $f_2$ in entgegengesetzter Richtung erzeugen, wobei sich die beiden Frequenzen geringfügig unterscheiden. Dadurch kommt es zur Ausbildung einer langsam umlaufenden "stehenden" Welle, wobei die Umlaufgeschwindigkeit, die in Richtung der Welle mit der höheren Frequenz weist, wesentlich niedriger als die Schallgeschwindigkeit ist. Typische optimale Umlaufgeschwindigkeiten sind in der Größenordnung von einem Umlauf pro einigen Sekunden. Wesentlich ist dabei die Verwendung unidirektionaler Beschallungseinrichtungen. Normale Beschallungseinrichtungen, die ohne weitere Maßnahmen gleichzeitig Schallwellen entgegengesetzter Orientierung aussenden, erzeugen auch in einer Ringresonatoranordnung nur stehende Wellen im engeren Sinn, bei denen keinerlei Bewegung des Resonanzwellenfeldes stattfindet. Die Differenzfrequenz $\Delta f = f_1 - f_2$ wird dabei typischerweise im Bereich 1 bis 100 Hz gewählt.

Vorteilhaft enthält der Ringresonator zwei unidirektionale Beschallungseinrichtungen, die zwei Schallwellen von geringfügig unterschiedlicher Frequenz in entgegengesetzte Richtung ausstrahlen. Die unidirektionale Beschallungseinrichtung kann aus einem piezoelektrischen Sandwich-Resonatorkern bestehen, der eine beliebige Gesamtdicke d aufweist und der aus piezoelektrischen Scheiben besteht, die bevorzugt die gleiche, die Größe des N-ten Teiles der Gesamtdicke d betragende, Dicke d/N aufweisen, wobei N die Gesamtzahl der Scheiben ist und die Scheiben jeweils beidseitig Elektroden aufweisen, die mit periodischen Spannungen $u_i$ angesteuert werden, deren zeitliche Phasenverschiebungen $\phi_i$ gleich den entsprechenden örtlichen Phasenverschiebungen $\psi_i$ der Schallschnelle $V_i$ in der i-ten Scheibe der von der Beschallungseinrichtung erzeugten akustischen Welle ist.

$$u_i = U\sin(\omega t - \phi_i), \quad V_i = V\sin(x/\lambda_A - \psi_i), \quad \phi_i = \psi_i = \pi/N, \quad \lambda_A = c_A/f_n, \qquad [6]$$

wobei $c_A$ und $\lambda_A$ die Schallgeschwindigkeit bzw. die Wellenlänge in den piezoelektrischen Scheiben bedeuten. Die Anregungsspannungen für die Scheiben des Resonatorkerns sind damit derart zeitlich phasenverschoben, daß sich nur eine akustische Welle in eine Richtung ausbilden kann, nicht aber in die Gegenrichtung.

Wenn sich die Schallkennimpedanzen der piezoelektrischen Scheiben einerseits und der Dispersion bzw. der Kopplungsflüssigkeit andererseits stark unterscheiden, kommt es durch die dadurch bedingten Reflexionen zu einer den Abscheidungseffekt störenden Überlagerung von stehenden Wellen im engeren Sinn zur angestrebten langsam umlaufenden "stehenden" Welle. Zur Vermeidung dieses nachteiligen Effektes können vorteilhaft unmittelbar an den Sandwich-Resonatorkern $\lambda/4$-Transformationsschichten anschließen, die die Schallkennimpedanz $z_A$ des Scheibenmaterials an die Schallkennimpedanz $z_D$ der Dispersion bzw. an die Schallkennimpedanz $z_K$ der Kopplungsflüssigkeit anpassen.

$$z_B = \sqrt{z_A z_D}, \quad z_C = \sqrt{z_A z_K}. \qquad [7]$$

Die unidirektionale Beschallungseinrichtung besteht bevorzugt aus einem piezoelektrischen Sandwich-Resonatorkern, der eine Gesamtdicke d aufweist, die gleich der halben Wellenlänge $\lambda_A/2$ oder gleich einem ganzzahligen Vielfachen der halben Wellenlänge $k\lambda_A/2$ der von dieser unidirektionalen Beschallungseinrichtung ausgesandten Schallwelle ist. Dadurch kann eine der beiden Transformationsschichten eingespart werden. Die verbleibende muß nur noch die Schalikennimpedanz $z_D$ der Dispersion an die Schallkennimpedahz $z_K$ der Kopplungsflüssigkeit anpassen. Ihre Schallkennimpedanz $z_T$ ergibt sich daher zu

$$z_T = \sqrt{z_D z_K}. \qquad [8]$$

Eine weitere Vereinfachung wird erzielt, wenn als Kopplungsflüssigkeit das Dispersionsmittel gewählt wird. In diesem Fall wird keine Transformationsschicht benötigt.

Nach einem letzten Merkmal der Erfindung können die zwei unidirektionalen Beschallungseinrichungen, die zwei Schallwellen von geringfügig unterschiedlicher Frequenz in entgegengesetzte Richtung ausstrahlen, durch eine einzige Beschallungseinrichtung ersetzt werden, die durch entsprechenden geometrischen Aufbau und elektrische Ansteuerung ebenfalls eine langsam umlaufende "stehende" Welle erzeugt, wobei aber die Einrichtung trotzdem stationär im Resonanzzustand verbleibt. Diese Beschallungseinrichtung besteht aus mindestens zwei piezoelektrischen Scheiben, die Dicken $D_1$ bzw. $D_2$ aufweisen, welche gleich der halben Wellenlänge $\lambda_A/2$ oder gleich einem ganzzahligen Vielfachen der halben Wellenlänge $k\lambda_A/2$ der von dieser Beschallungseinrichtung ausgesandten Schallwelle sind. Die Scheiben sind dabei bevorzugt gleich dick und müssen einen Abstand D zueinander aufweisen, der mit einem Füllmaterial gefüllt ist, das bevorzugt das Dispersionsmittel ist, und der gleich einem Viertel oder einem ungeradzahligen Vielfachen von einem Viertel der Wellenlänge $k\lambda_F/4$ im Füllmaterial ist. Bei dieser speziellen Beschallungseinrichtung weisen die beiden piezoelektrischen Scheiben jeweils beidseitig Elektroden auf, die mit Wechselspannungen $u_1$ bzw. $u_2$ angesteuert werden, die periodische Amplitudenmodulationen aufweisen, die zueinander

eine zeitliche Phasenverschiebung $\Phi$ aufweisen, die gleich $\pi/2$ bzw. einem ungeradzahligen Vielfachen von $\pi/2$ ($k\pi/2$) ist. Es gilt

$$u_1 = U\sin\Omega t.\sin\omega t, \quad u_2 = U\sin(\Omega t-\Phi).\sin\omega t = U\cos\Omega t.\sin\omega t, \quad \Phi = k\pi/2 , \qquad [9]$$

wobei $U\sin\Omega t$ bzw. $U\sin(\Omega t-\Phi)$ die zeitabhängigen Amplituden der Spannungen $u_1$ bzw. $u_2$, U den maximalen Amplitudenwert der Spannungen, $\Omega = 2\pi F$ die Kreisfrequenz der Amplitudenmodulation und $\omega = 2\pi f$ die Kreisfrequenz der anregenden hochfrequenten Wechselspannung bedeuten. Typische Werte für $\omega$ bzw. $\Omega$ sind hierbei $2\pi.2MHz$ bzw. $2\pi.100Hz$. Diese Beschallungseinrichtung, die durch entsprechende elektrische Ansteuerung eine umlaufende "stehende" Welle erzeugt, kann in einer anderen Ausführungsvariante auch als unidirektionale Beschallungseinrichtung zur Erzeugung einer laufenden Welle verwendet werden, indem man die elektrischen Ansteuerung ohne Amplitudenmodulation durchführt, also die elektrischen Ansteuerspannungen entsprechend Formel [9] durch Formel [10]

$$u_1 = U\sin\omega t, \quad u_2 = U\cos\omega t \qquad [10]$$

ersetzt. Der Vorteil dieser Beschallungseinrichtung liegt also darin, abhängig von der jeweiligen elektrischen Ansteuerung sowohl als unidirektionale Beschallungseinrichtung zur Erzeugung einer laufenden Welle, als auch als gesamte Beschallungseinheit zur Erzeugung einer umlaufenden "stehenden" Welle anwendbar zu sein.

Die Vorteile des erfindungsgemäßen Verfahrens werden im folgenden an Hand zweier technisch wichtiger Beispiele spezifiziert.

Im **Anwendungsbeispiel 1** besteht die behandelte Dispersion aus einem festen Dispersionsfarbstoff der in Wasser suspendiert ist. Die Korngröße der überwiegenden Zahl (85%) der Teilchen liegt zwischen 0,2 bis 2,5 $\mu$m, das Dichteverhältnis Farbstoff/Wasser beträgt $\rho'/\rho = 2,95$ , die charakteristische Frequenz ist ungefähr $f_o = 1,9$ MHz , als Betriebsresonanzfrequenz des zusammengesetzten Resonators wurde aus der großen Zahl von Resonanzfrequenzen jene mit $f_{res} = f_n = 2,35$ MHz gewählt und die maximale Amplitude der Schallschnelle lag bei $V_{max} = 3$ m/s . Bei einer Beschallungszeit von $t = 2$ min betrug die Trübung (vor der Beschallung $T_{vor} = 100\%$) nach konventioneller Beschallung ($V > V_{max}$ und $f \neq f_{res}$ , oder $V \leq V_{max}$ und $f \neq f_{res}$, , oder $V > V_{max}$ und $f = f_{res}$ , oder $V << V_{max}$ und $f \neq f_{res}$ , oder $V << V_{max}$ und $f = f_{res}$ ) $T_{nach} = 95\%$, bei erfindungsgemäßer Beschallung ($V \leq V_{max}$ und $f = f_{res}$) jedoch $T_{nach} = 15\%$.

Im **Anwendungsbeispiel 2** besteht die behandelte Dispersion aus einem festen Mineralstoffstaub der in Grundwasser suspendiert ist. Die Korngröße der überwiegenden Zahl (90%) der Teilchen liegt zwischen 1 bis 5 $\mu$m, das Dichteverhältnis beträgt $\rho'/\rho = 3,2$ , die charakteristische Frequenz ist ungefähr $f_o = 0,47$ MHz , als Betriebsresonanzfrequenz des zusammengesetzten Resonators wurde aus der großen Zahl von Resonanzfrequenzen jene mit $f_{res} = f_n = 2,35$ MHz gewählt und die maximale Amplitude der Schallschnelle lag bei $V_{max} = 7$ m/s . Bei einer Beschallungszeit von $t = 2$ min betrug die Trübung (vor der Beschallung $T_{vor} = 100\%$) nach konventioneller Beschallung $T_{nach} = 96\%$, nach erfindungsgemäßer Beschallung jedoch $T_{nach} = 10\%$.

Bei der Verschiebung des stehenden Schallfeldes in Querrichtung der stehenden Welle lassen sich in der Praxis Verkürzungen der für die Abscheidung erforderlichen Beschallungszeiten auf typischerweise 1/10 der Werte beim stationären Betrieb erreichen, während bei der Verschiebung in Längsrichtung noch weitergehende Verkürzungen der Beschallungszeit bzw. bei gleicher Beschallungszeit signifikant geringere Resttrübungen erzielbar sind. Geeignete Verschiebungsgeschwindigkeiten in Querrichtung der Welle sind von der Größenordnung von 1 cm/s, in Längsrichtung von 10 cm/s.

Die Figuren zeigen:

Die Figuren 1 bis 3 schematisch verschiedene Ausführungsvarianten der erfindungsgemäßen Einrichtung;

die Figur 4 das Prinzip und die Figur 5 eine Ausführungsvariante der Reflektoreinheit;

die Figur 6 eine Ausführungsvariante der erfindungsgemäßen Einrichtung mit Durchfluß und Amplitudenverteilung in Querrichtung;

die Figur 7 eine Ausführungsvariante einer Phasenplatte;

die Figuren 8-10 Ausführungsformen der Elektroden zur anharmonischen Anregung piezoelektrischer Resonatoren;

die Figur 11 eine weitere Ausführungsvariante der erfindungsgemäßen Einrichtung im Schnitt nach Linie XI-XI in Figur 12, bei der der Dispersionsbehälter mechanisch relativ zum Schallfeld in Längsrichtung bewegt wird;

die Figur 13 eine prinzipielle Darstellung der erfindungsgemäßen Einrichtung zu verschiedenen Zeitpunkten bzw. den Frequenzgang in Abhängigkeit von der Zeit;

die Figuren 14 und 15 weitere Ausführungsvarianten der erfindungsgemäßen Einrichtung;

die Figur 16 eine Ausführungsform des zusammengesetzten Ringresonators im Schnitt;

die Figur 17 ein Ausführungsbeispiel einer unidirektionälen Beschallungseinheit

und die Figur 18 eine Ausführungsvariante einer Beschallungseinrichtung, die eine langsam laufende "stehende" Welle erzeugt.

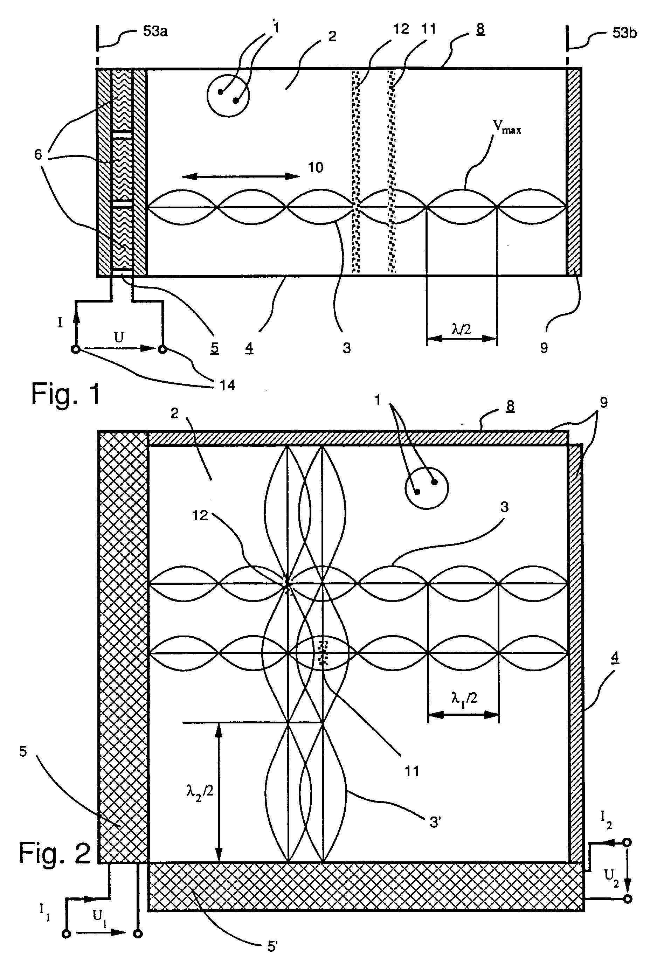

Wie in Figur 1 schematisch dargestellt, ist ein Behälter 8 vorgesehen, der eine Dispersion 2 enthält. Die Beschallung erfolgt ähnlich wie bei der Ultraschallreinigung unter Verwendung eines zusammengesetzten Resonators 4, der eine Beschallungseinrichtung 5 enthält, die aus einem elektrisch angetriebenen, mechanisch schwingfähigen Element 6 oder aus mehreren solchen Elementen besteht und die auf der einen Seite akustisch mit einem die Dispersion 2 enthaltenden Behälter 8 gekoppelt ist und die auf der Luft zugewandten Seite an einer effektiven Reflexionsfläche 53a Totalreflexion der akustischen Welle garantiert. Die effektiven Reflexionsflächen 53a und 53b sind jene Grenzflächen, über die sich die Schallwelle nicht weiter ausbreiten kann, an denen also die Totalreflexion der Schallwelle stattfindet. Sie sind auch dadurch charakterisiert, daß zwischen ihnen die Schallwelle gefangen ist und sich deshalb eine stehende Welle 3 ausbilden kann. Der Abstand zwischen den beiden effektiven Reflexionsflächen entspricht der effektiven Resonatorlänge, die für die Bestimmung der Resonanzfrequenzen entscheidend ist. Auf die effektive Resonatorlänge entfallen eine ganze Zahl von N halben Wellenlängen und - für den Fall der Verwendung eines erfindungsgemäßen Spiegels 9 auf nur einer der beiden Resonatorenden - eine Viertelwellenlänge. Als elektrisch angetriebenes, mechanisch schwingfähiges Element 6 werden meist Piezokeramik-Scheiben oder -Ringe verwendet, die z. B. aus Bariumtitanat oder Bleizirkonat-Titanat bestehen. Je nach dem angestrebten elektrischen Impedanzwert zwischen den Anschlüssen 14 der Beschallungseinrichtung 5 können die Elektrodenpaare der einzelnen Piezoelemente durch Parallelschaltung oder Serienschaltung oder einer Kombination aus beiden zu zwei Anschlüssen 14 zusammengefaßt werden, an denen die Antriebsspannung U angelegt wird und über die der Antriebsstrom I fließt. Da die Erfindung in ihren wichtigsten Merkmalen aber zunächst unabhängig davon ist, welcher Art die Schwingungsanregung ist, können auch elektromagnetische Antriebe, wie sie z.B. bei Lautsprechern verwendet werden, oder magnetostriktive Elemente eingesetzt werden.

Die Schallwellen müssen durch die zweite effektive Reflexionsfläche 53b eines akustischen Spiegels 9, der in dieser Ausführungsvariante gleichzeitig eine Begrenzungswand darstellt, reflektiert werden, damit sich stehende Schallwellen 3 ausbilden können, die auf die dispergierten Teilchen 1 Schallstrahlungskräfte in Längsrichtung 10 der stehenden Wellen 3 erzeugen, welche die Teilchen 1 in die Schnellebauchbereiche 11, in denen die Maximalamplituden $V_{max}$ der Schnallschnelle auftreten, bzw. Schnelieknotenbereiche 12 des stehenden Schallfeldes treiben und dort festhalten (Längshaltekräfte). Die benachbarten, in diesem Beispiel flächenförmigen, parallelen Schnellebauchbereiche 11 weisen jeweils einen Abstand von einer halben Wellenlänge λ/2 auf. Dies gilt ebenso für die Schnelleknotenbereiche 12. Die Begrenzungswände 9 für das Schallfeld fallen mit den Begrenzungswänden 9 des die Dispersion 2 enthaltenden Behälters 8 zusammen.

Die Figur 2 zeigt eine Ausführungsvariante, bei der zwei stehende Wellenfelder 3 bzw. 3' durch zwei Beschallungseinheiten 5 bzw. 5' erzeugt werden, die einen rechten Winkel zueinander einschließen. Auch die beiden Spiegel 9 schließen hier einen Winkel von 90° zueinander ein. Die an den elektrischen Anschlüssen der Beschallungseinrichtungen 5 bzw. 5' anliegenden Antriebsspannungen $U_1$ bzw. $U_2$ bewirken die Ströme $I_1$ bzw. $I_2$ und regen den zusammengesetzten Resonator 8 gleichzeitig auf zwei im allgemeinen unterschiedlichen Resonanzfrequenzen an, zu denen die unterschiedlichen Wellenlängen $λ_1$ bzw. $λ_2$ gehören. Auf diese Weise kann ein breiteres Spektrum von Teilchengrößen optimal erfaßt sowie eine höhere Teilchenaufkonzentration in den Schnellebauchbereichen bzw. Schnelleknotenbereichen erzielt werden. Die Schnellebauchbereiche 11 bzw. die Schnelleknotenbereiche 12 des stehenden Schallfeldes sind hier nicht flächige Gebilde wie bei der in Figur 1 dargestellten Ausführungsvariante, sondern sind im wesentlichen linienförmig. Je nach Beschaffenheit der Teilchen 1, das heißt insbesondere in Abhängigkeit des Vorzeichens des Dichtekompressibilitätsfaktors, sammeln sich die Teilchen 1 in den Schnellebauchhereichen 11 oder in den Schnelleknotenbereichen 12.

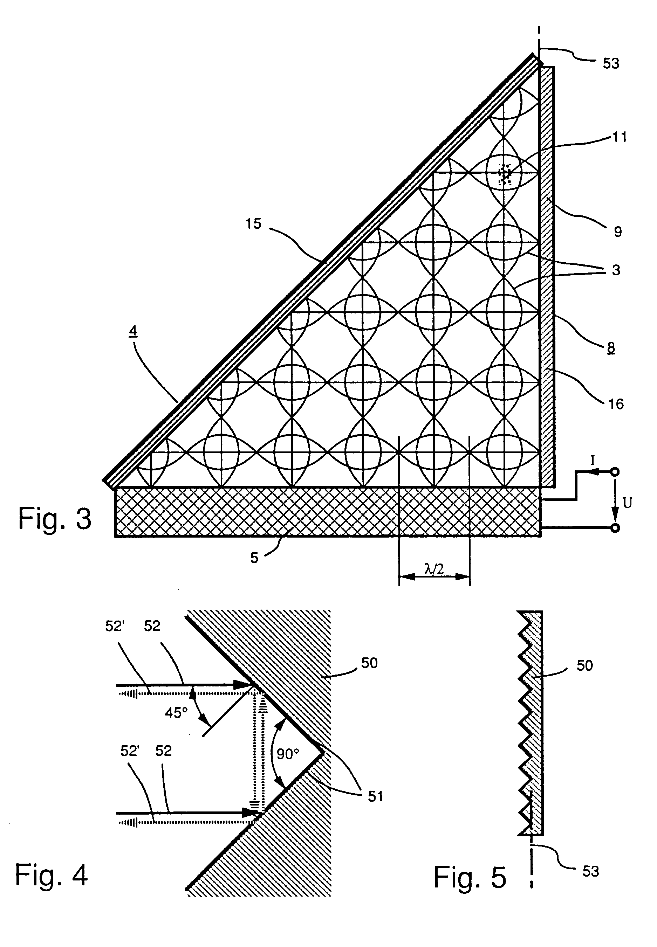

Bei der in Figur 3 schematisch im Schnitt dargestellten Ausführungsvariante der Erfindung wird eine Überlagerung von Wellenfronten, die zueinander einen rechten Winkel einschließen, mit einer einzigen Beschallungseinrichtung 5 erzielt. Die Beschallungseinrichtung 5 bildet mit dem Spiegelsystem, das aus einem unter 45° geneigten Spiegel 15 und einem weiteren, auf die stehende Welle 3 senkrecht stehenden, die effektive Reflexionsfläche 53 beinhaltenden, Spiegel 9 besteht, ein gleichschenkelig rechtwinkeliges Dreieck, wobei der geneigte Spiegel 15 die Hypothenuse bildet. Dies ermöglicht die Einsparung einer Beschallungseinrichtung. Die Schnellebauchbereiche 11 sind hier wieder linienförmig, wobei die Linien hoher Teilchenkonzentration normal auf die Zeichenebene stehen.

Die Figur 4 zeigt die prinzipielle Funktionsweise und Figur 5 eine Ausführungsvariante der erfindungsgemäßen Reflektoren 50, die erstens eine Totalreflexion der einfallenden Schallwelle 52 ohne Verluste im Reflektor und zweitens eine Phasengleichheit von einfallender 52 und reflektierter Welle 52' garantieren. Die einzelnen Spiegelflächen 51 schließen einen Winkel von 90° ein. Dadurch wird ein jeweiliges Auftreffen des akustischen Strahles auf die Oberfläche der entsprechenden Reflektorfläche von 45° und damit Totalreflexion und Phasenkonstanz aller Strahlen gewährleistet. Die effektive Reflexionsfläche 53 ist bei dieser Ausführungsform dadurch definiert, daß sie alle Schnittpunkte der einzelnen Spiegelflächen 51 beinhaltet.

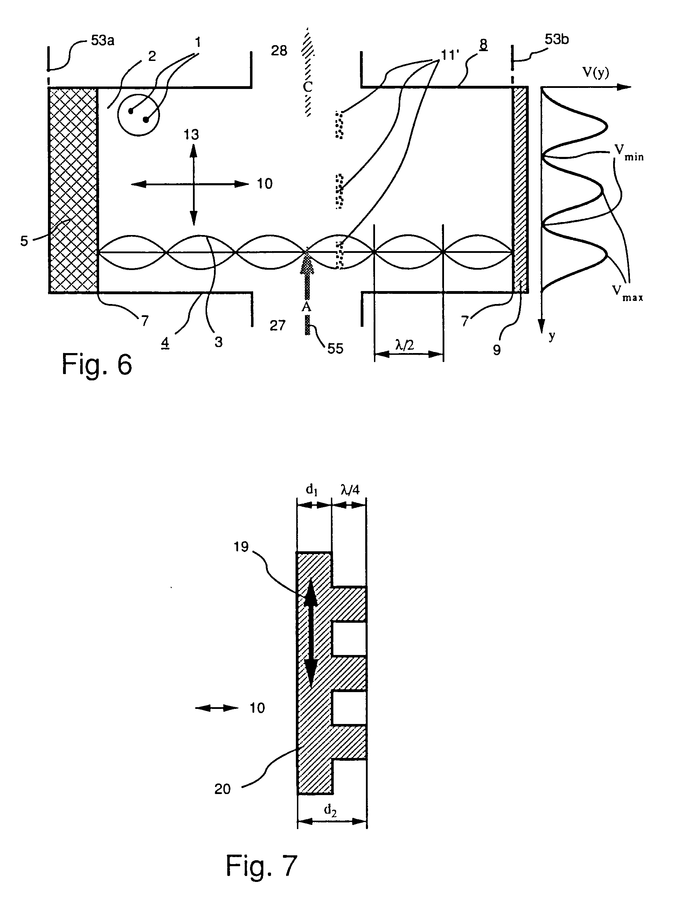

Die Figur 6 zeigt schematisch eine weitere Möglichkeit, die Konzentration der Teilchen 1 in der Dispersion 2 örtlich zu vergrößern. Die Schnelleamplitude V(y) der Wellen 3 schwankt hiebei entlang der Richtung y, die rechtwinkelig 13 auf die Ausbreitungsrichtung 10 der Wellen 3 steht, zwischen einem Minimalwert $V_{min}$ und einem Maximalwert $V_{max}$. Auf diese Weise werden Querkräfte auf die Teilchen wirksam, die durch die Gradienten der Schnelleamplitude V innerhalb der Schnellebauchbereiche 11 bzw. Schnelleknotenbereiche 12 verursacht werden. Die Teilchen 1 konzentrieren sich daher nur in den Bereichen 11' mit einer großen Amplitude V. Die Beschallungseinheit 5 ist dabei akustisch über einen Kopplungsfilm 7, der im einfachsten Fall aus einem sehr dünnen Flüssigkeits- oder Klebstoff-Film besteht, akustisch an das Gefäß 8 gekoppelt. Die zu behandelnde Dispersion A strömt durch die Zutrittsöffnung 27 in den Behälter 8 ein und das gereinigte Dispersionsmittel C durch die Austrittsöffnung 28 wieder aus, wodurch die Strömungsrichtung 55 im wesentlichen normal zur Längsrichtung 10 gehalten wird. Die dispergierten Teilchen 1 werden in den Bereichen maximaler Amplitude 11' festgehalten und angereichert.

In Figur 7 ist eine Phasenplatte 20 dargestellt, die Bereiche unterschiedlicher Dicke $d_1$ bzw. $d_2$ aufweist. Diese Bereiche sind durch rechtwinkelige Übergänge voneinander getrennt. Der Dickenunterschied beträgt optimalerweise ein Viertel oder ein ungeradzahliges Vielfaches eines Viertels der Wellenlänge $\lambda$ in der Phasenplatte, die geringere Dicke $d_1$ wird bevorzugt gleich einem ganzzahligen Vielfachen von einem Viertel dieser Wellenlänge $\lambda$ gewählt. Die Phasenplatte wird bevorzugt in Richtung 19 normal auf die Längsrichtung 10 der Wellen bewegt.

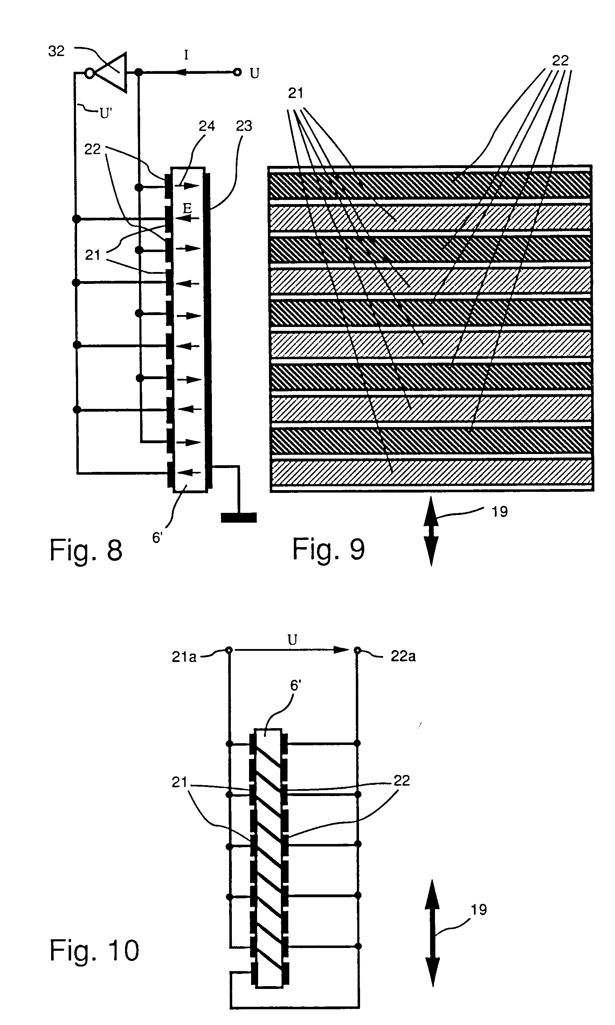

In den Figuren 8 und 9 ist die Elektrode zur Anregung der schwingfähigen Elemente 6' in zwei unterschiedliche Elektrodensätze 21 und 22 aufgeteilt. Die Anspeisung eines Elektrodensatzes 22 erfolgt dabei direkt mittels der Speisespannung U. Die Anspeisung des anderen Elektrodensatzes 21 erfolgt mittels einer Speisespannung U', die durch Invertierung aus U gewonnen wird. Zu diesem Zweck ist ein invertierender Verstärker 32 vorgeschaltet. Durch die Potentialdifferenz zur geerdeten Gegenelektrode 23 entstehen zu einem bestimmten Zeitpunkt im piezoelektrischen Resonator 6' Bereiche mit unterschiedlicher Richtung 24 der elektrischen Feldstärke E.

Bei der in Figur 10 dargestellten Variante der Beschallung wird ein Elektrodensatz 21 an einen Pol 21a der Steuerspannung U angelegt, und der andere Elektrodensatz 22 an den anderen Pol 22a. Dabei liegt jeweils ein zum Elektrodensatz 21 gehöriger Elektrodenabschnitt einem zum Elektrodensatz 22 gehöriger Elektrodenabschnitt gegenüber. Dadurch wird im Vergleich zu der in den Figuren 9 und 10 dargestellten Ausführungsvariante ein geringerer Anteil störender Querkomponenten des elektrischen Feldes erzielt.

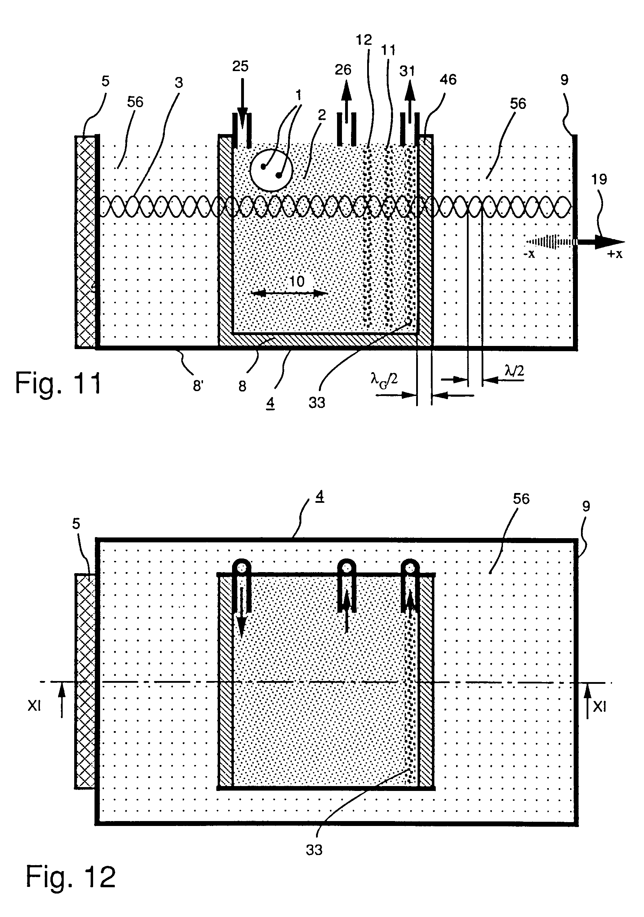

Bei dem in den Figuren 11 und 12 dargestellten Ausführungsbeispiel der erfindungsgemäßen Einrichtung wird ein die Dispersion 2 enthaltender innerer Behälter 8 relativ zum Schallfeld, das in einem äußeren Behälter 8' erzeugt wird, parallel zur Längsrichtung 10 des Schallfeldes in Richtung 19 verschoben. Der innere Behälter 8 ist aus schalldurchlässigen, reflexionsfreien Wänden 46 aufgebaut und befindet sich innerhalb des Hauptbehälters 8'. Der Raum zwischen dem inneren Behälter 8 und dem Hauptbehälter 8' ist mit einer Kopplungsflüssigkeit 56 ausgefüllt, die in der Regel der Einfachheit halber aus dem Dispersionsmittel, z. B. Wasser, besteht. Eine stehende Welle 3 befindet sich in bezug auf den Behälter 8' in Ruhe. Wird der Behälter 8' langsam in die Richtung +x bewegt (Trennphase), werden die Teilchen 1, die je nach dem Vorzeichen des Dichtekompressibilitätsfaktors in den Schnellebauchebenen 11 bzw. Schnellknotenebenen 12 festgehalten werden, in der Randzone 33 des inneren Behälters 8 aufkonzentriert, wo sie über die Absaugöffnung 31 abgesogen werden können. Die Wände 46 des inneren Behälters 8 sind reflexionsfrei ausgeführt. Dies wird im Ausführungsbeispiel durch eine Wandstärke, die gleich der halben Wellenlänge $\lambda_G/2$ im Wandmaterial ist, erreicht. Dadurch ist der die Dispersion enthaltende Behälter 8 gewissermaßen akustisch "unsichtbar".

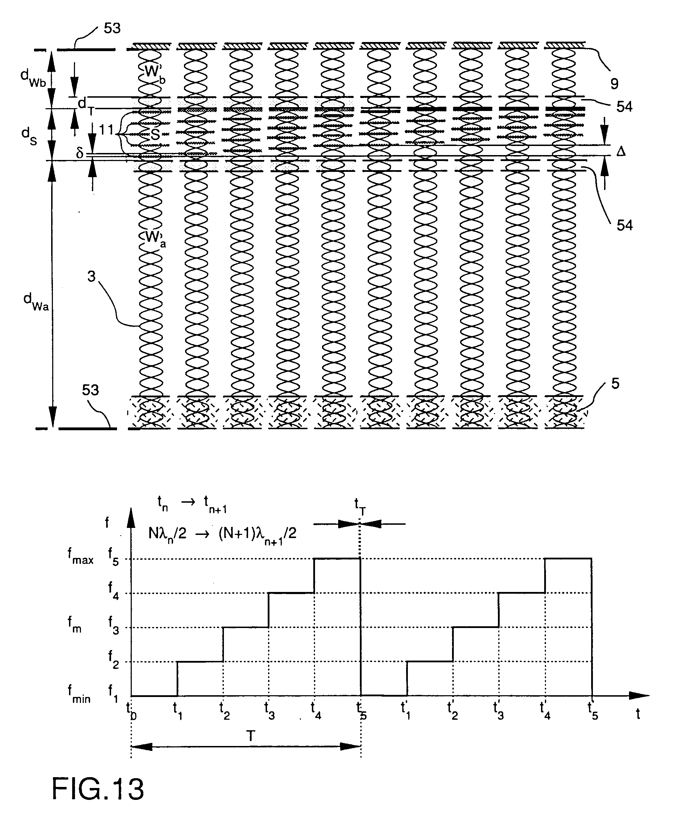

Bei der in Figur 13 dargestellten Ausführungsvariante der Erfindung wird eine stehende Welle 3 zwischen den effektiven Reflexionsflächen 53 einer Beschallungseinrichtung 5 und eines akustischen Spiegels 9, erzeugt. Der zusammengesetzte Resonator beinhaltet einen Separationsbereich S mit der Dicke $d_s$, der normal zur Ausbreitungsrichtung der stehenden Welle 3 durchströmt wird und in dem die dispergierten Teilchen in den Schnellebauchbereichen 11 angesammelt werden, und zwei Wellenleiterberei-

che $W_a$ und $W_b$ mit den Dicken $d_{Wa}$ und $d_{Wb}$, die mit dem Dispersionsmittel gefüllt sind. Der Separationsbereich S ist durch zwei akustisch transparente Wände 54, die eine Dicke $d_T$ von $\lambda/2$ besitzen, von den Wellenleiterbereichen $W_a$ und $W_b$ getrennt. Im Diagramm von Figur 13 ist die zeitliche Abfolge der Freuenzveränderung und in der Abbildung darüber die zugehörigen Verhältnisse im Resonator, für die Dauer von zwei Perioden $t_0 \to t_5'$, dargestellt. Während einer Periodendauer T wird die Frequenz schrittweise von der Resonanzfrequenz $f_1$ zur jeweils nächsten Resonanzfrequenz $f_{n+1}$ (n = 1 bis n = 4) bis zu $f_5$ erhöht, wobei die Serie $f_1$ bis $f_5$ eine geometrische Reihe darstellt. Die Anfangsfrequenz $f_1 = f_{min}$ und die Endfrequenz $f_5 = f_{max}$ sind so gewählt, daß die mittlere Frequenz $f_m \approx (f_{min} + f_{max})/2$ in der Nähe der Resonanzfrequenz $f_K$ der Beschallungseinrichtung liegt. Anschließend wird während der Totzeit $t_T$, die sehr klein im Vergleich zu der Einwirkungsdauer $\Delta t_n = t_n - t_{n-1}$, ist, auf die Anfangsfrequenz $f_{min}$ zurückgeschaltet und die nächste Periode beginnt, Die Anzahl N der halben Wellenlängen $\lambda_n/2$ im Resonator vergrößert sich dabei bei jedem Schritt um eins (N→N+1); nur beim letzten Schritt der Periode, während des Zurückschaltens auf die Anfangsfrequenz $f_{min}$, springt auch N auf seinen Ausgangswert zurück. Es gilt n = N-$N_{min}$ , wobei $N_{min}$ die bei der Frequenz $f_{min}$ im Resonator 4 zwischen den effektiven Spiegelflächen 53 auftretende Zahl von halben Wellenlängen bedeutet. Die Lage und Länge des Separationsbereiches S ist so gewählt, daß die größte Verschiebung eines Schallschnellebauchbereiches 11 beim Übergang von $f_n$ zur jeweils nächsten Resonanzfrequenz $f_{n+1}$ etwa einem Achtel der zu $f_n$ gehörigen Wellenlänge $\lambda_n$ entspricht und daß die maximale gesamte Verschiebung $\Delta$ der Schallschnellebereiche 11 während einer Periode ca. $\lambda_1/2$ ist. Der am Ende der zwei Perioden gereinigte Bereich hat daher eine Dicke von $2\Delta$.

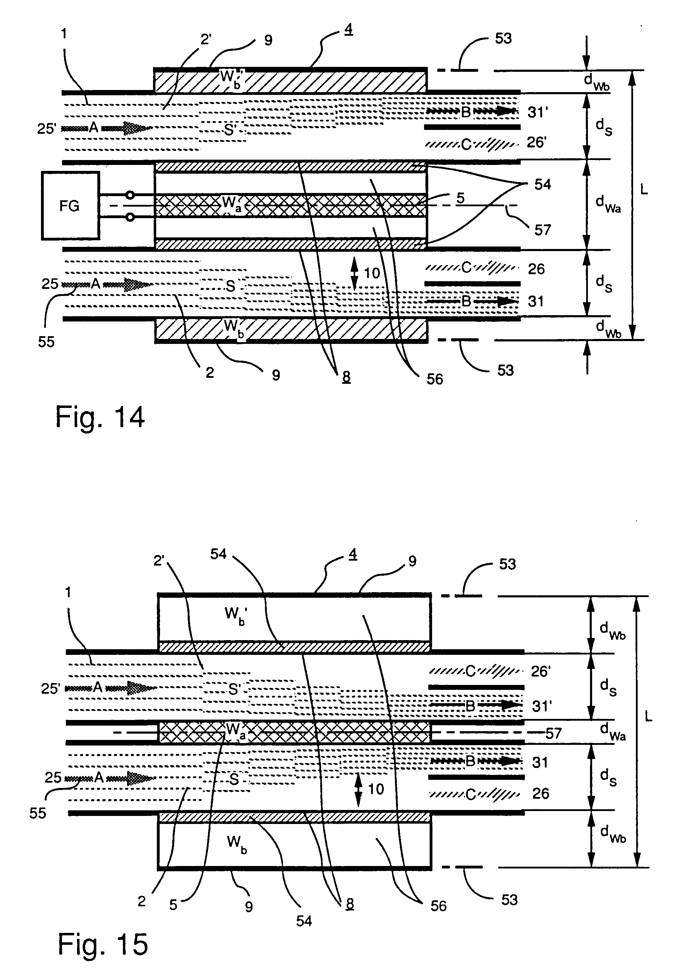

Bei den in Figur 14 und 15 dargestellten Ausführungsvarianten besteht der zusammengesetzte Resonator der Gesamtlänge L (typischerweise 20 bis 30cm) aus zwei Separationsbereichen S und S' und aus drei Wellenleiterbereichen $W_a$, $W_b$ und $W_b'$, wovon der Wellenleiterbereich $W_a$, der in der Mitte der zur Symmetrieachse 57 symmetrischen Resonatoranordnung angeordnet ist, die Beschallungseinrichtung 5 beinhaltet, die von der elektrischen Schaltung FG angetrieben wird. Die zu reinigende Dispersion A strömt durch die Eintrittsöffnungen 25 und 25' in Richtung 55 in den Resonator ein. Dort werden die dispergierten Teilchen gezwungen sich in eine bestimmte Richtung zu bewegen. Die gereinigte Dispersion C wird durch die Austrittsöffnungen 26 und 26', die angereicherte Dispersion B durch die Austrittsöffnungen 31 und 31', abgeleitet. Die Änderung der Dichte der strichlierten Linien 1 (Linienzahl/cm) soll hier nur die Änderung der Teilchendichte repräsentieren, die Linien geben hier nicht die Lage der Schnellebauchbereiche bzw. -knotenbereiche wieder. Bei Strömungsgeschwindigkeiten von 1cm/s erreicht man mit diesen Ausführungsvarianten Durchflußmengen von typischerweise 0,5m³/h.

In Figur 14 besteht der mittlere Wellenleiterbereich $W_a$ der Dicke $d_{Wa}$ (ca. 7 bis 10cm) aus der Beschallungseinrichtung 5, den mit Dispersionsmittel gefüllten Bereichen 56 und den akustisch transparenten Wänden 54, den beiden Wellenleiterbereichen $W_b$ und $W_b'$ der Dicken $d_{Wb}$ (ca. 0,5 bis 3cm) und aus akustischen Spiegeln 9 mit den effektiven Reflexionsflächen 53. Die Größe des gereinigten Bereiches 10 liegt in der Größenordnung der halben akustischen Länge $d_S/2$ ($d_S$ = 5 bis 8cm) der beiden Separationsbereiche S und S', wobei bei dieser Anordnung der Separationseffekt durch schrittweise Resonanzfrequenzerhöhung realisiert wird (für $f_m \approx 2MHz$ und einer Resonatorlänge L von 20 cm beträgt die Anzahl der halben Wellenlängen N im Resonator ca. 500 bis 600).

Im Unterschied zu Figur 14 wird bei Figur 15 der Separationseffekt durch schrittweise Resonanzfrequenzerniedrigung realisiert, wobei hier der mittlere Wellenleiterbereich $W_a$ der Dicke $d_{Wa}$ (ca. 1 bis 5mm) nur aus der Beschallungseinheit aufgebaut ist und die beiden Wellenleiterbereiche $W_b$ und $W_b'$ der Dicken $d_{Wb}$ (ca. 3 bis 6cm) jetzt aus akustischen Spiegeln 9 mit den effektiven Reflexionsflächen 53, den mit Dispersionsmittel gefüllten Bereichen 56 und den akustisch transparenten Wänden 54, bestehen. Der Aufbau und die Größe der Separationsbereiche S und S' ist analog zu Figur 14.

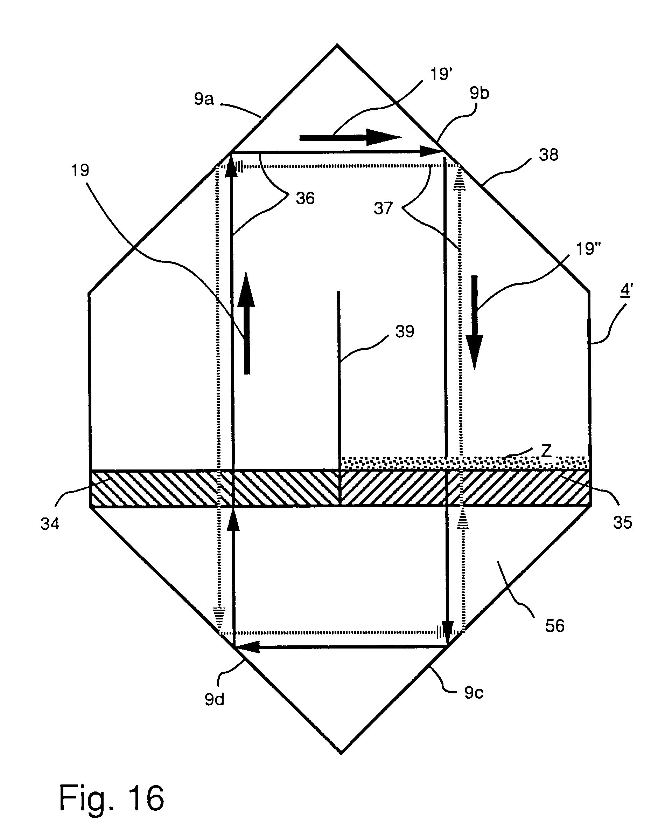

Bei der in Figur 16 dargestellten Ausführungsvariante der Erfindung ist der zusammengesetzte Resonator als Ringresonator 4' ausgebildet, bei dem die Umlenkung der Schallwellen in eine Ringbahn durch vier unter 45° geneigte, als akustische Spiegel 9a-9d wirkende und Totalreflexion gewährleistende Gefäßwände 38 erfolgt, und der zwei unidirektionale Beschallungseinrichtungen 34 und 35 enthält. Diese beiden Beschallungseinrichtungen 34 und 35 werden auf zwei Resonanzfrequenzen $f_1$ und $f_2$ betrieben, die sich geringfügig voneinander unterscheiden. Dadurch bildet sich eine in Richtung 19, 19', bzw. 19'' langsam umlaufende stehende Schallwelle aus, die aus der Überlagerung der von den beiden unidirektionalen Beschallungseinrichtungen 34 und 35 ausgesandten Ringwellen 36 bzw. 37 unterschiedlicher Wellenlänge entsteht. Diese befördert die in den Schnellebauchebenen 11 bzw. Schnellknotenebenen 12 festgehaltenen Teilchen 1 entlang der Ringwelle bis zu einer Zone Z, wo sie aufkonzentriert werden. Durch eine Trennwand 39 wird eine bessere Trennung, und dadurch eine geringere Beeinflußung in den beiden gegenläufigen Fortschreitungsrichtungen der Ringwelle, erreicht. Als Kopplungsflüssigkeit 56 wird das Dispersionsmittel, z. B. Wasser, verwendet.

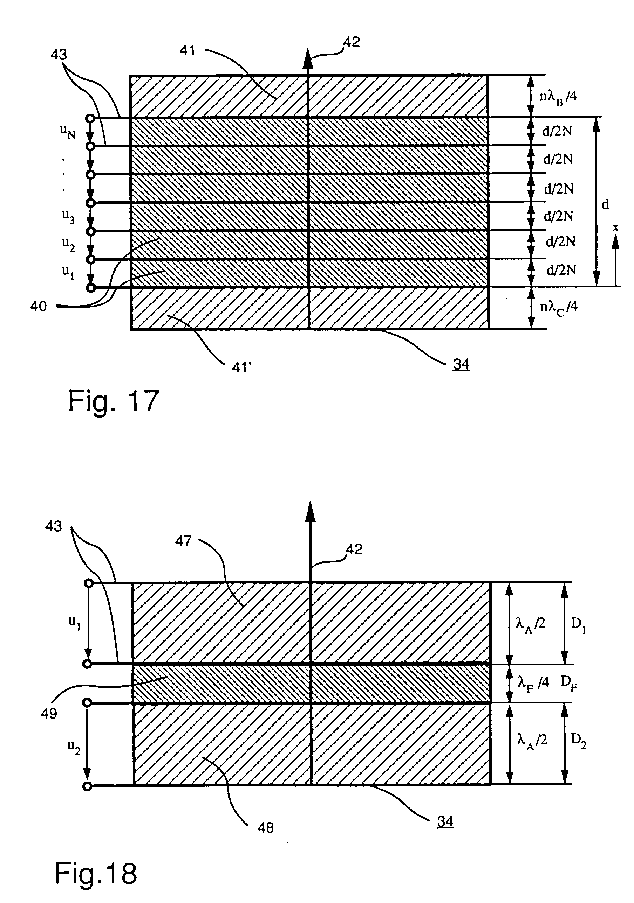

In Figur 17 ist eine unidirektionale Beschallungseinrichtung dargestellt, die aus einem Sandwich-Resonator 34 besteht, der aus zwei Impedanztransformationsschichten 41 und 41' aufgebaut ist, zwischen denen sich eine Mehrzahl N von Schichten 40 des Sandwich-Resonatorkerns befindet. Diese N Schichten 40 werden über Anregungselektroden 43 angeregt, an die die Anregungsspannungen $u_i$ gemäß Gl.[6] angelegt werden. Die Anregungsspannungen für die Scheiben des Resonatorkerns sind damit derart zeitlich phasenverschoben, daß sich nur eine akustische Welle in eine Richtung 42 ausbilden kann, nicht aber in die Gegenrichtung. Die Dicken der Impedanztransformationsschichten 41 bzw. 41' betragen ein Viertel oder ein ungeradzahliges Vielfaches eines Viertels der Wellenlängen $\lambda_B$ bzw. $\lambda_C$ in den betreffenden Transformationsschichten 40 bzw. 41. Die Impedanztransformationsschichten 41 und 41' können entfallen, wenn die Gesamtdicke d der N Schichten 40 gleich der halben oder einem ganzzahligen Vielfachen der halben Wellenlänge $k\lambda_A/2N$ der von dieser Beschallungseinheit angeregten Schallfrequenz im Schichtmaterial ist, und wenn gleichzeitig als Kopplungsflüssigkeit das Dispersionsmittel, z. B. Wasser, gewählt wird.

Figur 18 zeigt eine Ausführungsvariante einer Beschallungseinrichtung 5, 34 für den zusammengesetzten Resonator 4, 4', die aus zwei piezoelektrischen Scheiben 47, 48 besteht, die Dicken $D_1$, $D_2$ aufweisen, welche gleich der halben Wellenlänge $\lambda_A/2$ der von dieser Beschallungseinrichtung 34 ausgesandten Schallwelle (3, 36) sind und einen Abstand D zueinander aufweisen, der mit einem Füllmaterial 49 gefüllt ist, das gleich dem Dispersionsmittel 2 ist oder eine ähnliche Schallkennimpedanz wie dieses aufweist, und der gleich einem Viertel der Wellenlänge $\lambda_F/4$ im Füllmaterial ist, und bei der die piezoelektrischen Scheiben 47, 48 jeweils beidseitig Elektroden 43 aufweisen, die mit Wechselspannungen $u_1$, $u_2$ angesteuert werden, die periodische Amplitudenmodulationen aufweisen, die zueinander eine zeitliche Phasenverschiebung $\Phi$ haben, die gleich $\pi/2$ ist.

**Patentansprüche**

1. Verfahren zur Separation von Teilchen (1), welche in einem Dispersionsmittel dispergiert sind, bei dem in einem die Dispersion (2) aufnehmenden Behälter (8) eine stehende Ultraschallwelle (3), deren Frequenz vorzugsweise in der Umgebung der charakteristischen Frequenz ($f_o$) liegt, in einem zusammengesetzten Resonator (4) erzeugt wird, **dadurch gekennzeichnet**, daß die im Schallfeld auftretenden Amplituden (V) der Schallschnelle geringfügig kleiner als die obere Grenzamplitude ($V_{max}$) gewählt werden, bei der die Staukräfte auf die dispergierten Teilchen (1), die durch die von der Beschallung erzeugte akustische Strömung des Dispersionsmittels entstehen, gleich den Längshaltekräften der dispergierten Teilchen (1) in den Schnellebauchbereichen (11) bzw. Schnelleknotenbereichen (12) sind, und daß die Frequenz, mit der der zusammengesetzte Resonator (4) angetrieben wird, möglichst genau auf eine der Resonanzfrequenzen ($f_n$) des zusammengesetzten Resonators abgestimmt wird.

2. Verfahren nach Anspruch 1, **dadurch gekennzeichnet**, daß zwei stehende Wellenfelder (3, 3') erzeugt werden, die zueinander einen Winkel einschließen, der bevorzugt ein rechter Winkel ist.

3. Verfahren nach Anspruch 1, **dadurch gekennzeichnet**, daß drei stehende Wellenfelder erzeugt werden, die zueinander Winkel einschließen, die bevorzugt rechte Winkel sind.

4. Verfahren nach einem der Ansprüche 1 oder 2, **dadurch gekennzeichnet**, daß normal zur Ausbreitungsrichtung (10) der Wellen (3) durch Ausbildung ausgeprägter Gradienten der Schnelleamplitude (V) innerhalb der Schnellebauchbereiche (11) bzw. Schnelleknotenbereiche (12) Querkräfte auf die Teilchen (1) erzeugt werden, welche in Richtung steigender Amplitude (V) weisen.

5. Verfahren nach Anspruch 4, **dadurch gekennzeichnet**, daß die Ausbildung ausgeprägter Gradienten der Schnelleamplitude (V) innerhalb der Schnellebauchbereiche (11) bzw. Schnelleknotenbereiche (12) durch eine abwechselnde Aufeinanderfolge von Zonen (18) mit konstruktiver und Zonen (17) mit destruktiver Interferenz erzeugt wird.

6. Verfahren nach einem der Ansprüche 1 bis 5, **dadurch gekennzeichnet**, daß das sich bei der Betriebsresonanzfrequenz im Behälter (8) einstellende stehende Schallfeld (3) relativ zum Behälter (8) verschoben wird.

7. Verfahren nach Anspruch 6, **dadurch gekennzeichnet**, daß die Verschiebung normal zur Ausbreitungsrichtung (10) der Welle (3) erfolgt.

**8.** Verfahren nach Anspruch 6, **dadurch gekennzeichnet**, daß die Verschiebung in Richtung der Ausbreitungsrichtung (10) der Welle (3) erfolgt.

**9.** Verfahren nach einem der Ansprüche 1 bis 8, **dadurch gekennzeichnet**, daß die Dispersion (2) während der Beschallung durch eine Zutrittsöffnung (27) des Behälters einströmt, und daß durch eine Austrittsöffnung (28) das Dispersionsmittel ausströmt, wobei die Dispersion (2) den Behälter (8) im wesentlichen normal zur Längsrichtung durchströmt und die Teilchen (1) in den Schnellebauchbereichen (11) bzw. Schnelleknotenbereichen (12) festgehalten und angereichert werden.

**10.** Verfahren nach Anspruch 9, **dadurch gekennzeichnet**, daß periodisch wiederkehrend die elektrische Anregung der Resonanz jeweils solange unterbrochen wird, bis die in den Schnellebauchbereichen (11) bzw. Schnelleknotenbereichen (12) koagulierten Teilchen durch die Schwerkraft ausgefällt sind.

**11.** Verfahren nach Anspruch 10, **dadurch gekennzeichnet**, daß während der Dauer der Unterbrechung der elektrischen Anregung der Resonanz die Durchströmung unterbrochen ist.

**12.** Einrichtung zur Durchführung des Verfahrens nach einem der Ansprüche 1 bis 11, zur Separation dispergierter Teilchen (1) durch Beschallung der Dispersion (2) mit stehen-den Ultraschallwellen (3) in einem zusammengesetzten Resonator (4), der eine Beschallungseinrichtung (5) enthält, die aus mindestens einem elektrisch mit einer Frequenz in der Umgebung der charakteristichen Frequenz ($f_o$) angetriebenen, mechanisch schwingfähigen Element (6) besteht und die akustisch mit einem die Dispersion (2) enthaltenden Behälter (8) gekoppelt ist, der ein aus einem oder mehreren akustischen Spiegeln (9a, 9b...) aufgebautes akustisches Spiegelsystem (9) aufweist, welches die Schallwellen reflektiert, wodurch sich stehende Schallwellen (3) ausbilden können, die auf die dispergierten Teilchen (1) Schallstrahlungskräfte in Längsrichtung (10) der stehenden Wellen (3) erzeugen, welche die Teilchen (1) in die Schnellebauchbereiche (11) bzw. Schnelleknotenbereiche (12) des stehenden Schallfeldes (3) treiben und dort festhalten (Längshaltekräfte), mit Mittel zur Einstellung der elektrischen Antriebsfrequenz des Resonators (4), **dadurch gekennzeichnet**, daß Mittel zur langsamen Verschiebung der Beschallungseinrichtung (5, 5') relativ zum Behälter (8) bevorzugt normal zur Strömungsrichtung (55) vorgesehen sind.

**13.** Einrichtung nach Anspruch 12, **dadurch gekennzeichnet**, daß die akustische Kopplung zwischen Beschallungseinrichtung (5, 5') und Behälter (8) über einen Flüssigkeitsfilm (7) erfolgt, dessen Dicke wesentlich kleiner als ein Viertel der Wellenlänge im Flüssigkeitsfilm (7) bei der Betriebsfrequenz ($f_n$) ist.

**14.** Einrichtung nach Anspruch 12 oder 13, **dadurch gekennzeichnet**, daß der die Dispersion (2) enthaltende Behälter (8) akustisch transparente Wände (reflexionsfreie Wände) (46) besitzt und dieser Behälter (8) relativ zum Schallfeld verschoben wird, welches in einem weiteren, eine Kopplungsflüssigkeit (56) enthaltenden, Behälter (8') erzeugt wird.

**15.** Einrichtung zur Durchführung des Verfahrens nach einem der Ansprüche 1 bis 11, zur Separation dispergierter Teilchen (1) durch Beschallung der Dispersion (2) mit stehenden Ultraschallwellen (3) in einem zusammengesetzten Resonator (4), der eine Beschallungseinrichtung (5) enthält, die aus mindestens einem elektrisch mit einer Frequenz in der Umgebung der charakteristichen Frequenz ($f_o$) angetriebenen, mechanisch schwingfähigen Element (6) besteht und die akustisch mit einem die Dispersion (2) enthaltenden Behälter (8) gekoppelt ist, der ein aus einem oder mehreren akustischen Spiegeln (9a, 9b...) aufgebautes akustisches Spiegelsystem (9) aufweist, welches die Schallwellen reflektiert, wodurch sich stehende Schallwellen (3) ausbilden können, die auf die dispergierten Teilchen (1) Schallstrahlungskräfte in Längsrichtung (10) der stehenden Wellen (3) erzeugen, welche die Teilchen (1) in die Schnellebauchbereiche (11) bzw. Schnelleknotenbereiche (12) des stehenden Schallfeldes (3) treiben und dort festhalten (Längshaltekräfte), mit Mittel zur Einstellung der elektrischen Antriebsfrequenz des Resonators (4), **dadurch gekennzeichnet**, daß der zusammengesetzte Resonator (4) in Längsrichtung in einen oder mehrere Separationsbereiche (S) und in einen oder mehrere Wellenleiterbereiche (W) unterteilt ist, mittels einer elektronischen Schaltung (FG) die Antriebsfrequenz des zusammengesetzten Resonators (4) von einer minimalen bzw. maximalen Resonanzfrequenz ($f_{min}$, $f_{max}$) ausgehend schrittweise von einer Resonanzfrequenz ($f_n$) zur jeweils nächsten Resonanzfrequenz ($f_{n+1}$) erhöht bzw. erniedrigt wird bis eine maximale bzw. minimale Resonanzfrequenz ($f_{max}$, $f_{min}$)

erreicht ist; innerhalb einer Totzeit ($t_T$), die sehr klein gegenüber der Einwirkungsdauer $\Delta t_n$ der jeweiligen Frequenz ($f_n$) ist, wieder auf die Ausgangsfrequenz ($f_{min}$, $f_{max}$) zurückgeschaltet wird; der Vorgang zyklisch wiederholt wird und die Lage und die Länge ($d_S$) jedes Separationsbereiches innerhalb der Gesamtlänge (L) des zusammengesetzten Resonators (4) derart gewählt wird, daß für jeden beliebigen Frequenzschritt ($f_n \rightarrow f_{n+1}$) die größte innerhalb des Separationsbereiches (S) auftretende Verschiebung ($\delta$) eines Schallschnellebauchbereiches (11) stets kleiner als ein Viertel, bevorzugt ein Sechstel der jeweiligen Ausgangswellenlänge ($\lambda_n$) ist und die zum gesamten Frequenzhub ($f_{max}$-$f_{min}$) zugehörige innerhalb des Separationsbereiches (S) größte auftretende Verschiebung ($\Delta$) eines Schallschnellebauchbereiches (11) größer als ein Viertel der mittleren Wellenlänge ($\lambda_{max}$/4) ist.

**16.** Einrichtung nach Anspruch 15, **dadurch gekennzeichnet**, daß zwei, bevorzugt symmetrisch zur Symmetrieachse (57) angeordnete, Separationsbereiche (S, S') und drei Wellenleiterbereiche ($W_a$, $W_b$, $W_b'$) ausgebildet sind, wovon ein Wellenleiterbereich ($W_a$) in der Mitte (57) zwischen den Separationsbereichen liegt und die beiden anderen Wellenleiterbereiche ($W_b$, $W_b'$) an den Enden (53) des zusammengesetzten Resonators (4) angeordnet sind.

**17.** Einrichtung nach Anspruch 16, **dadurch gekennzeichnet**, daß die Beschallungseinheit (5) im mittleren Wellenleiterbereich ($W_a$) enthalten ist oder diesen bildet.

**18.** Einrichtung nach einem der Ansprüche 15 bis 17, **dadurch gekennzeichnet**, daß der dazwischenliegende Wellenleiterbereich ($W_a$) aus einem bevorzugt aus dem Dispersionsmittel bestehenden Flüssigkeitsbereich (56) gebildet wird, der an einem oder beiden Enden durch akustisch transparente Wände (54) eingeschlossen ist.

**19.** Einrichtung nach einem der Ansprüche 15 bis 18, **dadurch gekennzeichnet**, daß einer oder beide der an den Enden angeordneten Wellenleiterbereiche ($W_b$, $W_b'$) aus je einem bevorzugt aus dem Dispersionsmittel bestehenden Flüssigkeitsbereich (56) gebildet wird, der am innenliegenden Ende durch eine akustisch transparente Wand (54) und am außenliegenden Ende durch einen akustischen Spiegel (9) abgeschlossen ist.

**20.** Einrichtung nach einem der Ansprüche 14, 18 oder 19, **dadurch gekennzeichnet**, daß die akustisch transparenten Wände (46, 54) eine Wandstärke von einer halben oder einem ganzzahligen Vielfachen einer halben Wellenlänge ($\lambda_G$/2) im Wandmaterial bei der mittleren Betriebsfrequenz ($f_m$) aufweisen.

**21.** Einrichtung nach einem der Ansprüche 14 oder 20, **dadurch gekennzeichnet**, daß die akustisch transparenten Wände (46) aus einem Material gefertigt sind, dessen Schallkennimpedanz ($z_W$) sich möglichst wenig von der Schallkennimpedanz ($z_D$) der Dispersion (2,2') unterscheidet.

**22.** Einrichtung nach einem der Ansprüche 14 bis 21, **dadurch gekennzeichnet**, daß die akustisch transparenten Wände (46) aus einem inneren Wandmaterial beliebiger Stärke gefertigt werden, dessen Schallkennimpedanz ($z_W$) auf der der Dispersion (2, 2') zugewandten Seite über eine unmittelbar anschließende λ/4-Transformationsschicht an die Schallkennimpedanz ($z_D$) der Dispersion (2, 2') angepaßt wird, während sie auf der der Kopplungsflüssigkeit (7,56) zugewandten Seite über eine unmittelbar anschließende λ/4-Transformationsschicht an die Schallkennimpedanz ($z_K$) der Kopplungsflüssigkeit (7,56) angepaßt wird.

**23.** Einrichtung nach Anspruch 15 und einem der Ansprüche 16 bis 22, **dadurch gekennzeichnet**, daß die akustische Länge ($d_{Wa}$) des mittleren Wellenleiterbereiches ($W_a$) ungefähr gleich einem Drittel der akustischen Länge (L) des zusammengesetzten Resonators (4) gewählt wird.

**24.** Einrichtung nach Anspruch 15 und einem der Ansprüche 16 bis 23, **dadurch gekennzeichnet**, daß die an den Enden angeordneten Wellenleiterbereiche ($W_b$, $W_b'$) nur durch die als akustische Spiegel (9) ausgebildeten Behälterwände selbst aufgebaut sind.

**25.** Einrichtung nach Anspruch 15 und einem der Ansprüche 16 bis 22, **dadurch gekennzeichnet**, daß der mittlere Wellenleiterbereich ($W_a$) nur durch die Beschallungseinrichtung (5) selbst gebildet wird.

26. Einrichtung nach Anspruch 15 und einem der Ansprüche 16 bis 22 oder 25, **dadurch gekennzeichnet**, daß die akustischen Längen ($d_{Wb}$, $d_{Wb'}$) der an den Enden angeordneten Wellenleiterbereiche ($W_b$, $W_b'$) ungefähr gleich einem Sechstel der akustischen Länge (L) des zusammengesetzten Resonators (4) gewählt werden.

27. Einrichtung nach einem der Ansprüche 15 bis 26, **dadurch gekennzeichnet**, daß die Ausgangsresonanzfrequenz ($f_{min}$) kleiner und die maximale Frequenz ($f_{max}$) größer als eine Resonanzfrequenz ($f_K$) der Beschallungseinrichtung (5) gewählt wird.

28. Einrichtung nach Anspruch 27, **dadurch gekennzeichnet**, daß die mittlere Resonanzfrequenz ($f_m$) gleich einer Resonanzfrequenz ($f_K$) der Beschallungseinrichtung (5) gewählt wird.

29. Einrichtung nach einem der Ansprüche 15 bis 28, **dadurch gekennzeichnet**, daß die Separationsbereiche (S, S') im wesentlichen normal zur Wellenausbreitungsrichtung (10) von der Dispersion (2) durchströmt werden.

30. Einrichtung nach Anspruch 29, **dadurch gekennzeichnet**, daß die Strömungsgeschwindigkeit so gewählt wird, daß die Verweilzeit der Dispersion (2, 2') im beschallten Separationsbereich (S) größer als die Periodendauer (T) des zeitlichen Verlaufs der Antriebsfrequenz (f) ist.

31. Einrichtung zur Durchführung des Verfahrens nach einem der Ansprüche 1 bis 11, zur Separation dispergierter Teilchen (1) durch Beschallung der Dispersion (2) mit stehenden Ultraschallwellen (3) in einem zusammengesetzten Resonator (4), der eine Beschallungseinrichtung (5) enthält, die aus mindestens einem elektrisch mit einer Frequenz in der Umgebung der charakteristichen Frequenz ($f_o$) angetriebenen, mechanisch schwingfähigen Element (6) besteht und die akustisch mit einem die Dispersion (2) enthaltenden Behälter (8) gekoppelt ist, der ein aus einem oder mehreren akustischen Spiegeln (9a, 9b...) aufgebautes akustisches Spiegelsystem (9) aufweist, welches die Schallwellen reflektiert, wodurch sich stehende Schallwellen (3) ausbilden können, die auf die dispergierten Teilchen (1) Schallstrahlungskräfte in Längsrichtung (10) der stehenden Wellen (3) erzeugen, welche die Teilchen (1) in die Schnellebauchbereiche (11) bzw. Schnelleknotenbereiche (12) des stehenden Schallfeldes (3) treiben und dort festhalten (Längshaltekräfte), mit Mittel zur Einstellung der elektrischen Antriebsfrequenz des Resonators (4), **dadurch gekennzeichnet**, daß der zusammengesetzte Resonator als Ringresonator (4') ausgebildet ist, der eine oder mehrere Beschallungseinrichtungen (34, 35) enthält.

32. Einrichtung nach Anspruch 31, **dadurch gekennzeichnet**, daß der Ringresonator (4') sowohl eine erste unidirektionale Beschallungseinrichtung (34) enthält, die eine erste umlaufende Resonanzwelle der Frequenz ($f_1$) erzeugt, als auch eine zweite unidirektionale Beschallungseinrichtung (35) enthält, die eine zweite umlaufende Resonanzwelle der Frequenz ($f_2$) in entgegengesetzter Richtung (37) erzeugt, wobei sich die beiden Frequenzen ($f_1$, $f_2$) geringfügig unterscheiden.

33. Einrichtung nach einem der Ansprüche 31 oder 32, **dadurch gekennzeichnet**, daß die unidirektionale Beschallungseinrichtung (34, 35) aus einem piezoelektrischen Sandwich-Resonatorkern besteht, der eine Gesamtdicke (d) aufweist und der aus N piezoelektrischen Scheiben (40) besteht, die bevorzugt die gleiche, die Größe des N-ten Teiles der Gesamtdicke (d) betragende, Dicke (d/N) aufweisen, wobei die Scheiben (40) jeweils beidseitig Elektroden (43) aufweisen, die mit periodischen Spannungen ($u_i$) angesteuert werden, deren zeitliche Phasenverschiebungen ($\phi_i$) gleich den entsprechenden örtlichen Phasenverschiebungen ($\psi_i$) der Schallschnelle ($V_i$) in den Scheiben (40) der von der Beschallungseinrichtung (34, 35) erzeugten akustischen Welle (36, 37) ist.

34. Einrichtung nach Anspruch 33, **dadurch gekennzeichnet**, daß an den Sandwich-Resonatorkern $\lambda/4$-Transformationsschichten (41, 41') anschließen, die die Schallkennimpedanz ($z_A$) des Scheibenmaterials an der der Dispersion (2) zugewandten Seite an die Schallkennimpedanz ($z_D$) der Dispersion (2) anpassen und an der der Kopplungsflüssigkeit (56) zugewandten Seite an die Schallkennimpedanz ($z_K$) der Kopplungsflüssigkeit anpassen.

35. Einrichtung nach Anspruch 33, **dadurch gekennzeichnet**, daß der piezoelektrische Sandwich-Resonatorkern eine Gesamtdicke (d) aufweist, die gleich der halben Wellenlänge ($\lambda_A/2$) oder gleich einem ganzzahligen Vielfachen der halben Wellenlänge (k $\lambda_A/2$) der von dieser unidirektionalen Beschallungseinrichtung (34, 35) ausgesandten Schallwelle (36, 37) ist.

36. Einrichtung nach Anspruch 35, **dadurch gekennzeichnet**, daß an den Sandwich-Resonatorkern auf einer der beiden Seiten eine $\lambda/4$-Transformationsschicht (41, 41') anschließt, die die Schallkennimpedanz ($z_D$) der Dispersion (2) an die Schallkennimpedanz ($z_K$) der Kopplungsflüssigkeit (56) anpaßt.

37. Einrichtung nach Anspruch 31, **dadurch gekennzeichnet**, daß der Ringresonator (4') eine Beschallungseinrichtung (34) enthält, die aus mindestens zwei piezoelektrischen Scheiben (47, 48) besteht, die Dicken ($D_1$, $D_2$) aufweisen, welche gleich der halben Wellenlänge ($\lambda_A/2$) oder gleich einem ganzzahligen Vielfachen der halben Wellenlänge (k $\lambda_A/2$) der von dieser Beschallungseinrichtung (34) ausgesandten Schallwelle (36, 37) sind, die bevorzugt gleich dick sind und einen Abstand ($D_F$) zueinander aufweisen, der mit einem Füllmaterial (49) gefüllt ist, das bevorzugt das Dispersionsmittel (2) ist, und der gleich einem Viertel oder einem ungeradzahligen Vielfachen von einem Viertel der Wellenlänge ($k_1$ $\lambda_F/4$) im Füllmaterial ist, und bei der die piezoelektrischen Scheiben (47, 48) jeweils beidseitig Elektroden (43) aufweisen, die mit Wechselspannungen ($u_1$, $u_2$) angesteuert werden, die periodische Amplitudenmodulationen aufweisen, die zueinander eine zeitliche Phasenverschiebung ($\Phi$) aufweisen, die gleich $\pi/2$ bzw. einem ungeradzahligen Vielfachen von $\pi/2$ ($k_2 \pi/2$) ist.

38. Einrichtung nach Anspruch 31, **dadurch gekennzeichnet**, daß die akustischen Spiegel (9) so ausgeführt sind, daß die Umlenkung der Resonanz-Ringwelle im Ringresonator durch Totalreflexion erfolgt.

39. Einrichtung nach einem der Ansprüche 12 bis 30, **dadurch gekennzeichnet**, daß der Resonator (4) mit zwei Beschallungseinrichtungen (5, 5') versehen ist, deren Beschallungsrichtungen vorzugsweise einen Winkel von 90° einschließen.

40. Einrichtung nach Anspruch 12 bis 30, **dadurch gekennzeichnet**, daß eine einzige Beschallungseinrichtung (5) vorgesehen ist, die eine Schallwelle in einer ersten Richtung aussendet, welche über ein akustisches Spiegelsystem (9) Schallwellen erzeugt, die bevorzugt einen Winkel von 90° zur ersten Richtung einschließen.

41. Einrichtung nach einem der Ansprüche 12 bis 30, **dadurch gekennzeichnet**, daß der Resonator (4) mit drei Beschallungseinrichtungen versehen ist, deren Beschallungsrichtungen vorzugsweise jeweils Winkel von 90° gegeneinander einschließen.

42. Einrichtung nach einem der Ansprüche 12 bis 41, **dadurch gekennzeichnet**, daß der akustische Spiegel (9) aus einer Platte mit planparallelen Oberflächen besteht, das Plattenmaterial eine im Vergleich zur Dispersion möglichst hohe Schallkennimpedanz aufweist, und die Dicke der Platte bevorzugt gleich einem Viertel oder einem ungeradzahligen Vielfachen von einem Viertel der Wellen-länge ($\lambda$) in der Platte ist.

43. Einrichtung nach einem der Ansprüche 12 bis 30, **dadurch gekennzeichnet**, daß der akustische Spiegel (9) aus einer oder mehreren Reflektorflächen (51) besteht, die einen Winkel von 90°±5° zueinander aufweisen und die zu dem einfallenden Strahl (52) so ausgerichtet sind, daß der Auftreffwin-kel $\Theta_e$ des Strahles (52) auf die Reflektorflächen (51) 45°±5° beträgt und die aus einem Material bestehen, deren Eigenschaften den Bedingungen für die Totalreflektion von Scherwellen $\Theta_s<\Theta_e$ und von Longitudinalwellen $\Theta_l<\Theta_e$ genügen.

44. Einrichtung nach einem der Ansprüche 12 bis 43, **dadurch gekennzeichnet**, daß die akustischen Spiegel (9) gleichzeitig die Funktion von Behälterwänden übernehmen oder Teile von Behälterwänden bilden.

45. Einrichtung nach einem der Ansprüche 12 bis 30, **dadurch gekennzeichnet**, daß eine abwechselnde Aufeinanderfolge von Zonen (18) mit konstruktiver und Zonen (17) mit destruktiver Interferenz durch Einfügen einer Phasenplatte (20), die bevorzugt senkrecht zur Längsrichtung (10) der stehenden Welle (3) angeordnet ist, erzeugt wird, wobei die Phasenplatte (20) unterschiedlich dicke Bereiche aufweist und die Dickenabmessungen ($d_1$) und ($d_2$) der Bereiche sich um einen Betrag unterscheiden, der eine Phasendifferenz der, diese unterschiedlich dicken Bereiche durchlaufenden, Wellen (3) von etwa $\pi/4$

oder einem ungeradzahligen Vielfachen von $\pi/4$ bewirkt und wobei die kleinere Dickenabmessung ($d_1$) bevorzugt gleich einem Viertel oder einem ganz-zahligen Vielfachen von einem Viertel der Wellenlänge in der Platte (20) ist.

46. Einrichtung nach Anspruch 45, **dadurch gekennzeichnet**, daß die Phasenplatte (20) eine als akustischer Spiegel (9) wirkende Behälterwand oder einen Teil einer solchen Behälterwand bildet.

47. Einrichtung nach einem der Ansprüche 12 bis 30, 39 oder 40, **dadurch gekennzeichnet**, daß eine Ausbildung ausgeprägter Gradienten der Schnelleamplitude (V) innerhalb der Schnellebauchbereiche (11) bzw. Schnelleknotenbereiche (12) durch eine Beschallungseinrichtung (5) erfolgt, deren örtlicher Amplitudenverlauf in Querrichtung relative Minima und Maxima aufweist.

48. Einrichtung nach einem der Ansprüche 12 bis 47, **dadurch gekennzeichnet**, daß das elektrisch anregbare, mechanisch schwingfähige Element (6) ein piezoelektrischer Resonator (6') ist.

49. Einrichtung nach Anspruch 48, **dadurch gekennzeichnet**, daß ein scheibenförmiger piezoelektrischer Resonator (6') mit planparallelen Scheibenflächen (planparalleler Resonator) vorgesehen ist.

50. Einrichtung nach Anspruch 48, **dadurch gekennzeichnet**, daß ein scheibenförmiger piezoelektrischer Resonator (6'') mit einer planen und einer konvex gekrümmten Scheibenfläche (plankonvexer Resonator) vorgesehen ist.

51. Einrichtung nach einem der Ansprüche 48 bis 50, **dadurch gekennzeichnet**, daß der piezoelektrische Resonator (6', 6'') auf einer anharmonischen Resonanzfrequenz angeregt ist.

52. Einrichtung nach Anspruch 51, **dadurch gekennzeichnet**, daß die elektrische Anregbarkeit der anharmonischen Resonanzfrequenz durch Aufspaltung der Elektrodenflächen in Teilflächen (21, 22) erhöht ist, wobei die Lage und die Größe der Teilflächen (21, 22) so gewählt ist, daß sie mit der Lage und der Größe der schwingenden Bereiche der gewünschten anharmonischen Schwingungsmode übereinstimmt und die elektrische Anspeisung der zu gegenphasig schwingenden Bereichen gehörigen Elektroden elektrisch gegenphasig erfolgt.

53. Einrichtung nach einem der Ansprüche 12 bis 52, **dadurch gekennzeichnet**, daß der Behälter (8) eine Zutrittsöffnung (27), durch die die zu behandelnde Dispersion (A) einströmen kann, und eine Austrittsöffnung (28), durch die das Dispersionsmittel (C) ausströmen kann, besitzt, wodurch die Dispersion (2) den Behälter (8) im wesentlichen normal zur Längsrichtung (10) durchströmen kann und die Teilchen (1) in den Schnellebauchbereichen (11) bzw. Schnelleknotenbereichen (12) festgehalten und angereichert werden.

54. Einrichtung nach einem der Ansprüche 12 bis 53, **dadurch gekennzeichnet**, daß die elektrische Antriebsfrequenz der Beschallungseinrichtung (4) auf eine Resonanzfrequenz des zusammengesetzten Resonators (4) feinabgestimmt ist.

55. Einrichtung nach Anspruch 54, **dadurch gekennzeichnet**, daß Mittel zur Feinabstimmung auf eine natürliche Resonanzfrequenz des zusammengesetzten Resonators (4) vorgesehen sind, bei der die Leistungsaufnahme der Beschallungseinrichtung (5) ein relatives Maximum aufweist.

56. Einrichtung nach Anspruch 54, **dadurch gekennzeichnet**, daß Mittel zur Feinabstimmung auf eine Serien-Resonanzfrequenz des Resonators vorgesehen sind, bei der bei einer im Vergleich zur Resonatorimpedanz niederohmigen Anspeisung die Stromaufnahme der Beschallungseinrichtung (5) ein relatives Maximum aufweist.

57. Einrichtung nach Anspruch 54, **dadurch gekennzeichnet**, daß Mittel zur Feinabstimmung auf eine Parallel-Resonanzfrequenz des Resonators vorgesehen sind, bei der bei extrem hochohmiger Anspeisung die an der Beschallungseinrichtung (5) anliegende elektrische Spannung ein relatives Maximum aufweist.

**58.** Einrichtung nach einem der Ansprüche 54 bis 57, **dadurch gekennzeichnet**, daß die Feinabstimmung auf das relative Maximum durch automatische Regelung der elektrischen Antriebsfrequenz auf das relative Maximum erfolgt.

**59.** Einrichtung nach einem der Ansprüche 54 bis 57, **dadurch gekennzeichnet**, daß die Feinabstimmung auf eine Resonanzfrequenz des Resonators durch Einbeziehung der an den elektrischen Anschlüssen der Beschallungseinrichtung (5) auftretenden elektrischen Impedanz als amplituden- und phasenbestimmendes Bandpaß-Filterelement in den Rückkopplungskreis einer Oszillatorschaltung erfolgt.

**60.** Einrichtung nach den Ansprüchen 57 oder 59, **dadurch gekennzeichnet**, daß eine Oszillatorschaltung vorgesehen ist, die eine Regeleinrichtung der Amplitude der sich bei der Betriebsresonanzfrequenz einstellenden Spannung an den elektrischen Anschlüssen der Beschallungseinrichtung (5) enthält.

**61.** Einrichtung nach den Ansprüchen 56 oder 59, **dadurch gekennzeichnet**, daß eine Oszillatorschaltung vorgesehen ist, die eine Regeleinrichtung der Amplitude der sich bei der Betriebsresonanzfrequenz einstellenden Stromaufnahme der elektrischen Anschlüsse der Beschallungseinrichtung (5) enthält.

**Claims**

**1.** A method for separating particles (1) being dispersed in a dispersion medium, wherein in a vessel (8) receiving the dispersion (2) an ultrasonic standing wave (3) whose frequency preferably lies in the vicinity of the characteristic frequency ($f_o$) is generated in a composite resonator (4), characterized in that the amplitudes (V) of the sound particle velocity occurring in the field of sound are selected slightly slightly smaller than the upper threshold amplitude ($V_{max}$) at which the impact pressure forces acting on the dispersed particles (1), said forces arising as a result of the acoustic stream of the dispersion medium which was generated by the application of sound, are equivalent to the longitudinal holding forces of the dispersed particles (1) in the areas of the antinodes (11) or areas of nodes (12) and that the frequency with which the composite resonator (4) is driven is adjusted as precisely as possible to one of the resonate frequencies ($f_n$) of the composite resonator.

**2.** A method as claimed in claim 1, characterized in that two standing wave fields (3, 3') are generated which mutually enclose an angle which is preferably a right angle.

**3.** A method as claimed in claim 1, characterized in that three standing wave fields are generated which mutually enclose angles which are preferably right angles.

**4.** A method as claimed in one of the claims 1 or 2, characterized in that lateral forces are produced in the particles (1) normal to the direction of propagation (10) of the waves (3) by the formation of distinct gradients of the velocity amplitude (V) within the areas of antinodes (11) or the areas of nodes (12), which forces face in the direction of rising amplitude (V).

**5.** A method as claimed in claim 4, characterized in that the formation of distinct gradients of the velocity amplitude (V) within the areas of antinodes (11) or areas of nodes (12) is generated by an alternating succession of zones (18) with constructive and zones (17) with destructive interference.

**6.** A method as claimed in one of the claims 1 to 5, characterized in that the standing field of sound (3) arising with the operating resonant frequency in the vessel (8) is displaced relative to the vessel (8).

**7.** A method as claimed in claim 6, characterized in that the displacement is made normal to the direction of propagation (10) of the wave (3).

**8.** A method as claimed in claim 6, characterized in that the displacement is made in the direction of the direction of propagation (10) of the wave (3).

**9.** A method as claimed in one of the claims 1 to 8, characterized in that the dispersion (2) flows in through an inlet opening (27) of the vessel during the acoustic irradiation and that the dispersion medium flows out through an outlet opening (28), with the dispersion (2) flowing through the vessel (8) substantially normal to the longitudinal direction and the particles being held or accumulated in the areas of antinodes (11) or the areas of nodes (12).

10. A method as claimed in claim 9, characterized in that the electrical excitation of the resonance is interrupted in a periodically repeated manner for such a time until the particles coagulated in the areas of antinodes (11) or the areas of nodes (12) are precipitated by gravity.

11. A method as claimed in claim 10, characterized in that the flow is interrupted for the duration of the interruption of the electrical excitation of the resonance.

12. A device for carrying out the method as claimed in one of the claims 1 to 11, for separating dispersed particles (1) by acoustic irradiation of the dispersion (2) with ultrasonic standing fields (3) in a composite resonator (4) comprising an acoustic irradiation device (5) consisting at least of one mechanically oscillatable element (6) being electrically driven at a frequency in the vicinity of the characteristic frequency ($f_o$) and being acoustically coupled with a vessel (8) containing the dispersion (2) which is provided with an acoustic mirror system (9) composed of one or several acoustic mirrors (9a, 9b,....) which reflects the sound waves, thus allowing standing sound waves (3) to arise which produce on the dispersed particles (1) sound radiation forces in the longitudinal direction (10) of the standing waves (3) which drive the particles (1) into the areas of antinodes (11) or areas of nodes (12) of the standing field of sound (3) and hold them there (longitudinal holding forces), with means for setting the electric drive frequency of the resonator (4), characterized in that means are provided for the slow displacement of the acoustic irradiation device (5, 5') relative to the vessel (8), preferably normal to the direction of flow (55).

13. A device as claimed in claim 12, characterized in that the acoustic coupling between the acoustic irradiation device (5, 5') and vessel (8) is made via a liquid film (7) whose thickness is substantially smaller than a quarter of the wavelength in the liquid film (7) at the operating frequency ($f_n$).

14. A device as claimed in claim 12 or 13, characterized in that the vessel (8) containing the dispersion (2) is provided with acoustically transparent walls (46) (reflection-free walls) and this vessel (8) is displaced relative to the field of sound which is produced in a further vessel (8') comprising a coupling liquid (56).

15. A device for carrying out the method as claimed in one of the claims 1 to 11, for separating dispersed particles (1) by acoustic irradiation of the dispersion (2) with ultrasonic standing waves (3) in a composite resonator (4) comprising an acoustic -irradiation device (5) consisting at least of one mechanically oscillatable element (6) electrically driven at a frequency in the vicinity of the characteristic frequency ($f_o$) and being acoustically coupled with a vessel (8) containing the dispersion (2) which is provided with an acoustic mirror system (9) composed of one or several acoustic mirrors (9a, 9b,....) which reflects the sound waves, thus allowing standing sound waves (3) to arise which produce on the dispersed particles (1) sound radiation forces in the longitudinal direction (10) of the standing waves (3) which drive the particles (1) into the areas of antinodes (11) or areas of nodes (12) of the standing field of sound (3) and hold them there (longitudinal holding forces), with means for setting the electric drive frequency of the resonator (4), characterized in that the composite resonator (4) is subdivided in the longitudinal direction in one or several separation areas (S) and in one or several waveguide areas (W), the drive frequency of the composite resonator (4) is increased or decreased from a minimum or maximum resonant frequency ($f_{min}, f_{max}$) starting out stepwise from a resonant frequency ($f_n$) to the respective next resonant frequency ($f_{n+1}$) by means of an electronic circuit (FG) until a maximum or minimum resonant frequency ($f_{max}, f_{min}$) is reached; the initial frequency (fmin, fmax) is returned to again within a delay time ($t_T$) which is very small with respect to the induction period $\Delta t_n$ of the respective frequency ($f_n$); the process is repeated in a cyclic manner and the position and the length ($d_s$) of each separation area within the overall length (L) of the composite resonator (4) is selected such-like that for any frequency step ($f_n \rightarrow f_{n+1}$) the largest displacement ($\delta$) of a sound antinode area (11) occurring within the separation area (S) is always smaller than a quarter, preferable one-sixth of the respective initial wavelength ($\lambda n$) and the largest displacement ($\Delta$) of a sound antinode area (11) occurring within the separation area (S) and belonging to the entire frequency fluctuation ($f_{max}-f_{min}$) is larger than one quarter of the mean wavelength ($\lambda_{max}/4$).

16. A device as claimed in claim 15, characterized in that two separation areas (S, S'), preferably arranged symmetrically to the axis of symmetry (57), and three waveguide areas ($W_a, W_b, W_b'$) are arranged, of which one waveguide area ($W_a$) is disposed in the centre (57) between the separation areas and the two other waveguide areas ($W_b$, $W_b'$) are arranged at the ends (53) of the composite resonator (4).

17. A device as claimed in claim 16, characterized in that the sound irradiation unit (5) is contained in the central waveguide zone ($W_a$) or forms it.

18. A device as claimed in one of the claims 15 to 17, characterized in that the interposed waveguide zone ($W_a$) is formed by a liquid area (56) preferably consisting of the dispersion medium, which area is enclosed at one or both ends by acoustically transparent walls (54).

19. A device as claimed in one of the claims 15 to 18, characterized in that one or both of the waveguide areas ($W_b$,$W_b'$) arranged at the ends is each formed by a liquid area (56) preferably consisting of a dispersion medium, which area is enclosed at the enclosed end by an acoustically transparent wall (54) and on the outside end by an acoustic mirror (9).

20. A device as claimed in one of the claims 14, 18 or 19, characterized in that the acoustically transparent walls (46, 54) are provided with a wall thickness of half or an integral multiple of half a wavelength ($\lambda_G/2$) in the wall material at the mean operating frequency ($f_m$).

21. A device as claimed in one of the claims 14 or 20, characterized in that the acoustically transparent walls (46) are made from a material whose characteristic acoustic impedance ($z_W$) differs as little as possible from the characteristic acoustic impedance ($z_D$) of the dispersion (2,2').

22. A device as claimed in one of the claims 14 to 21, characterized in that the acoustically transparent walls (46) are made from an inner wall material of any random thickness whose characteristic acoustic impedance ($z_W$) is adjusted on the side facing the dispersion (2,2') to the characteristic acoustic impedande ($z_D$) of the dispersion via a directly adjacent $\lambda/4$ transformation layer, whereas on the side facing the coupling liquid (7,56) it is adjusted to the characteristic acoustic impedance ($z_K$) of the coupling liquid (7,56) via a directly adjacent $\lambda/4$ transformation layer.

23. A device as claimed in claim 15 and one of the claims 16 to 22, characterized in that the acoustic length ($d_{Wa}$) of the mean waveguide area ($W_a$) is selected approximately equivalent to one-third of the acoustic length (L) of the composite resonator (4).

24. A device as claimed in claim 15 and one of the claims 16 to 23, characterized in that the waveguide areas ($W_b$, $W_b'$) provided at the ends are arranged by the vessel walls themselves only which are arranged as acoustic mirrors (9).

25. A device as claimed in claim 15 and one of the claims 16 to 22, characterized in that the central waveguide area ($W_a$) is only formed by the acoustic irradiation device (5) itself.

26. A device as claimed in claim 15 and one of the claims 16 to 22 or 25, characterized in that the acoustic lengths ($d_{Wb}$, $d_{Wb'}$) of the waveguide areas ($W_b$, $W_b'$) arranged at the ends are selected approx. equivalent to one-sixth of the acoustic length (L) of the composite resonator (4).

27. A device as claimed in one of the claims 15 to 26, characterized in that the initial resonant frequency ($f_{min}$) is smaller and the maximum frequency ($f_{max}$) is selected larger than a resonant frequency ($f_K$) of the acoustic irradiation device (5).

28. A device as claimed in claim 27, characterized in that the mean resonant frequency ($f_m$) is selected equivalent to a resonant frequency ($f_K$) of the acoustic irradiation device (5).

29. A device as claimed in one of the claims 15 to 28, characterized in that the dispersion (2) flows through the separation areas (S, S') substantially normal to the direction of propagation of the waves (10).

30. A device as claimed in claim 29, characterized in that the flow speed is selected such-like that the dwell time of the dispersion (2,2') in the acoustically irradiated separation area (S) is larger than the period time (T) of the temporal curve of the drive frequency (f).

**31.** A device for carrying out the method as claimed in one of the claims 1 to 11, for separating dispersed particles (1) by acoustic irradiation of the dispersion (2) with ultrasonic standing fields (3) in a composite resonator (4) comprising an acoustic irradiation device (5) consisting at least of one mechanically oscillatable element (6) electrically driven at a frequency in the vicinity of the characteristic frequency ($f_o$) and being acoustically coupled with a vessel (8) containing the dispersion (2) which is provided with an acoustic mirror system (9) composed of one or several acoustic mirrors (9a, 9b,....) which reflects the sound waves, thus allowing standing sound waves (3) to arise which produce on the dispersed particles (1) sound radiation forces in the longitudinal direction (10) of the standing waves (3) which drive the particles (1) into the areas of antinodes (11) or areas of nodes (12) of the standing field of sound (3) and hold them there (longitudinal holding forces), with means for setting the electric drive frequency of the resonator (4), characterized in that the composite resonator is arranged as a ring resonator (4') which comprises one or several acoustic irradiation devices (34, 35).

**32.** A device as claimed in claim 31, characterized in that the ring resonator (4') comprises both a first unidirectional acoustic irradiation device (34) which produces a first revolving resonant wave of the frequency ($f_1$) as well as a second unidirectional acoustic irradiation device (35) which produces a second revolving resonant wave of the frequency ($f_2$) in the opposite direction (37), with both frequencies ($f_1$, $f_2$) differing slightly from one another.

**33.** A device as claimed in one of the claims 31 or 32, characterized in that the unidirectional acoustic irradiation device (34, 35) consists of a piezoelectric sandwich resonator core which is provided with an overall thickness (d) and consists of N piezoelectric discs (40) preferably having the same thickness (d/N) being in the magnitude of the nth part of the overall thickness (d), with the discs (40) being provided on both sides with electrodes (43) which are charged with periodic voltages ($u_i$) whose temporal phase shifts ($\phi_i$) are equal to the respective local phase shifts ($\psi_i$) of the acoustic velocity ($v_i$) in the discs (40) of the acoustic wave (36, 37) produced by the acoustic irradiation device (34, 35).

**34.** A device as claimed in claim 33, characterized in that $\lambda/4$ transformation layers (41, 41') are adjacent to the sandwich resonator core, which layers adjust the characteristic acoustic impedance ($z_A$) of the disc material on the side facing the dispersion (2) to the characteristic acoustic impedance ($z_D$) of the dispersion (2) and to the characteristic acoustic impedance ($z_K$) of the coupling liquid (56) on the side facing the coupling liquid.

**35.** A device as claimed in claim 33, characterized in that the piezoelectric sandwich resonator core is provided with an overall thickness (d) which is equal to half the wavelength ($\lambda_A/2$) or equal to an integral multiple of half the wavelength ($k\lambda_A/2$) of the sound wave (36, 37) emitted by said unidirectional acoustic irradiation device (34, 35).

**36.** A device as claimed in claim 35, characterized in that a $\lambda/4$ transformation layer (41, 41') is adjacent to the sandwich resonator core on one of the two sides, which layer adjusts the characteristic acoustic impedance ($z_D$) of the dispersion (2) to the characteristic acoustic impedance ($z_K$) of the coupling liquid (56).

**37.** A device as claimed in claim 31, characterized in that the ring resonator (4') comprises an acoustic irradiation device (34) consisting of at least two piezoelectric discs (47, 48) which are provided with thicknesses ($D_1$, $D_2$) which are equal to half the wavelength ($\lambda_A/2$) or equal to an integral multiple of half the wavelength ($k\lambda_A/2$) of the sound wave (36, 37) emitted by said acoustic irradiation device (34), are preferably of similar thickness and are mutually distanced ($D_F$), and is filled with a filling material (49) which is preferably the dispersion medium (2) and is equal to one-quarter or an uneven multiple of a quarter of the wavelength ($k1\lambda_F/4$) in the filling material, and that the piezoelectric discs (47, 48) are provided on either side with electrodes (43) which are charged with alternating voltages ($u_1$, $u_2$) which are provided with periodic amplitude modulations which have a temporal phase shift ($\Phi$) towards one another which is equal to $\pi/2$ or an uneven multiple of $\pi/2$ ($k_2\pi/2$).

**38.** A device as claimed in claim 31, characterized in that the acoustic mirrors (9) are arranged such-like that the deflection of the resonance ring wave in the ring resonator is made by total reflection.

**39.** A device as claimed in one of the claims 12 to 30, characterized in that the resonator (4) is provided with two acoustic irradiation devices (5, 5') whose directions of acoustic irradiation preferably enclose an angle of 90°.

**40.** A device as claimed in claim 12 to 30, characterized in that a single acoustic irradiation device (5) is provided which emits a sound wave in a first direction which produces sound waves through an acoustic mirror system (9) which preferably enclose an angle of 90° to the first direction.

**41.** A device as claimed in one of the claims 12 to 30, characterized in that the resonator (4) is provided with three acoustic irradiation devices whose directions of acoustic irradiation each enclose an angle of 90° towards one another.

**42.** A device as claimed in one of the claims 12 to 41, characterized in that the acoustic mirror (9) consists of a plate with plane-parallel surfaces, the plate material is provided with the highest possible characteristic acoustic impedance in comparison with the dispersion, and the thickness is preferably equal to one-quarter or an uneven multiple of a quarter of the wavelength ($\lambda$) in the plate.

**43.** A device as claimed in one of the claims 12 to 30, characterized in that the acoustic mirror (9) consists of one or several reflector surfaces (51) which are provided with an angle of 90° ±5° towards one another and which are aligned with respect to the impinging ray (52) such-like that the angle of impact $\theta_e$ of the ray (52) on the reflector surface (51) is 45° ±5° and which are made from a material whose properties meet the conditions for the total reflection of shear waves $\theta_s < \theta_e$ and of longitudinal waves $\theta_l < \theta_e$.

**44.** A device as claimed in one of the claims 12 to 43, characterized in that the acoustic mirrors (9) simultaneously assume the function of walls of the vessel or parts of the walls of the vessel.

**45.** A device as claimed in one of the claims 12 to 30, characterized in that an alternating sequence of zones (18) with constructive and zones (17) with destructive interference is produced by inserting a phase plate (20) which is arranged preferably vertical to the longitudinal direction (10) of the standing wave (3), whereby the phase plate (20) is provided with differently thick zones and the dimensions of thickness ($d_1$) and ($d_2$) of the zones differ by an amount which causes a phase difference of the waves (3) passing through said differently thick zones of approx. $\pi/4$ or an uneven multiple of $\pi/4$ and whereby the smaller dimension in thickness ($d_1$) is preferably equal to one-quarter or an integral multiple of a quarter of the wavelength in the plate (20).

**46.** A device as claimed in claim 45, characterized in that the phase plate (20) forms a wall of the vessel acting as acoustic mirror (9) or a part of such a wall of the vessel.

**47.** A device as claimed in one of the claims 12 to 30, 39 or 40, characterized in that a formation of distinct gradients of the velocity amplitude (V) within the areas of antinodes (11) or areas of nodes (12) is made by an acoustic irradiation device (5) whose local amplitude curve shows relative minima and maxima in the lateral direction.

**48.** A device as claimed in one of the claims 12 to 47, characterized in that the electrically excitable, mechanically oscillatable element (6) is a piezoelectric resonator (6').

**49.** A device as claimed in claim 48, characterized in that a disc-like piezoelectric resonator (6') with plane-parallel disc surfaces (plane-parallel resonator) is provided.

**50.** A device as claimed in claim 48, characterized in that a disc-like piezoelectric resonator (6'') with a plane and a convexly curved disc surface (plane-convex resonator) is provided.

**51.** A device as claimed in one of the claims 48 to 50, characterized in that the piezoelectric resonator (6', 6'') is excited at an anharmonic resonant frequency.

**52.** A device as claimed in claim 51, characterized in that the electric excitability of the anharmonic resonant frequency is increased by splitting the electrode surfaces into partial surfaces (21, 22), with the position and the size of said partial surfaces (21, 22) being chosen such-like that they coincide with the position and the size of the oscillating zones of the desired anharmonic oscillating mode and the electric charging of the electrodes belonging to the zones oscillating in counterphase is made in electric counterphase.

53. A device as claimed in one of the claims 12 to 52, characterized in that the vessel (8) is provided with an inlet opening (27) through which the dispersion (A) to be treated can flow in and an outlet opening (28) through which the dispersion medium (C) can flow out, by means of which the dispersion (2) can flow through the vessel substantially normal to the longitudinal direction (10) and the particles (1) are held and accumulated in the areas of antinodes (11) or in the areas of nodes (12).

54. A device as claimed in one of the claims 12 to 53, characterized in that the electric drive frequency of the acoustic irradiation device (5) is fine-tuned to a resonant frequency of the composite resonator (4).

55. A device as claimed in claim 54, characterized in that means are provided for fine-tuning to a natural resonant frequency of the composite resonator (4), in which the power output of the acoustic irradiation device (5) is provided with a relative maximum.

56. A device as claimed in claim 54, characterized in that means are provided for fine-tuning to series resonant frequency of the resonator, in which the current consumption of the acoustic irradiation device (5) has a relative maximum at a low-resistance charge which is low in comparison to the resonator.

57. A device as claimed in claim 54, characterized in that means are provided for fine-tuning to parallel resonant frequency of the resonator, in which the electric voltage applied to the acoustic irradiation device (5) is provided with a relative maximum at an extremely high-resistance charge.

58. A device as claimed in one of the claims 54 to 57, characterized in that the fine-tuning to the relative maximum is made by automatic control of the electric drive frequency.

59. A device as claimed in one of the claims 54 to 57, characterized in that the fine-tuning to a resonant frequency of the resonator is made by including the impedance occurring on the electric connections of the acoustic irradiation device (5) as amplitude- or phase-determining bandpass filter element into the feedback loop of an oscillator circuit.

60. A device as claimed in claims 57 or 59, characterized in that an oscillator circuit is provided which comprises a control device for the amplitude of the voltage arising at the operating resonant frequency on the electric connections of the acoustic irradiation device (5).

61. A device as claimed in claims 56 or 59, characterized in that an oscillator circuit is provided which comprises a control device for the amplitude of the current consumption arising at the operating resonant frequency on the electric connections of the acoustic irradiation device (5).

**Revendications**

1. Procédé de séparation de particules (1), qui sont dispersées dans un milieu de dispersion, dans lequel une onde ultrasonore stationnaire (3), dont la fréquence est de préférence aux environs de la fréquence caractéristique ($f_0$), est produite par un résonateur composé (4) dans un récipient (8) contenant la dispersion (2), caractérisé en ce que les amplitudes (V) de l'onde de vitesse sonore se produisant dans le champs sonore sont choisies un peu plus petites que l'amplitude extrême supérieure ($V_{max}$), à laquelle les forces de retenue s'exerçant sur les particules dispersées (1), qui prennent naissance à partir du courant acoustique du milieu de dispersion produit par le dispositif d'excitation sonore, sont égales aux forces de retenue longitudinale des particules dispersées (1) dans les zones de ventres de vitesse (11) ou des zones de noeuds de vitesse (12), et que la fréquence, avec laquelle le résonateur composé (4) est excité, soit autant que possible en syntonisation avec une des fréquences de résonance ($f_n$) du résonateur composé.

2. Procédé selon la revendication 1, caractérisé en ce que deux champs d'ondes (3,3') stationnaires sont produits, formant entre eux un angle, qui, de préférence, est un angle droit.

3. Procédé selon la revendication 1, caractérisé en ce que trois champs d'ondes stationnaires sont produits, formant entre eux des angles, qui, de préférence, sont des angles droits.

4. Procédé selon l'une quelconque des revendications 1 ou 2, caractérisé en ce que des forces transversales sont produites sur les particules (1) perpendiculairement à la direction de propagation (10) des ondes (3) par la formation de gradients prononcés de l'amplitude de l'onde de vitesse (V) à l'intérieur des zones de ventres de vitesse (11) et de noeuds de vitesse (12), dans la direction de l'amplitude croissante.

5. Procédé selon la revendication 4, caractérisé en ce que la formation de gradients prononcés de l'amplitude de l'onde de vitesse (V) à l'intérieur des zones de ventres de vitesse (11) et de noeuds de vitesse (12) est produite par une succession de zones (18) d'interférence constructive alternant avec des zones (17) d' interférence destructive.

6. Procédé selon l'une quelconque des revendications 1 à 5, caractérisé en ce que le champs sonore (3) stationnaire qui se forme dans le récipient (8) à la fréquence de résonance d'excitation est déplacé par rapport au récipient (8).

7. Procédé selon la revendication 6, caractérisé en ce que le déplacement se produit perpendiculairement à la direction de propagation (10) de l'onde (3).

8. Procédé selon la revendication 6, caractérisé en ce que le déplacement se produit dans la direction de propagation (10) de l'onde (3).

9. Procédé selon l'une quelconque des revendications 1 à 8, caractérisé en ce que la dispersion (2) pénètre durant l'excitation sonore par une ouverture d'entrée (27) du récipient, et que le milieu de dispersion s'écoule par une ouverture de sortie (28), et en ce que la dispersion (2) traverse le récipient (8) essentiellement perpendiculairement à la direction longitudinale et que les particules (1) sont retenues et concentrées dans les zones de ventres de vitesse (11) ou de noeuds de vitesse (12).

10. Procédé selon la revendication 9, caractérisé en ce que l'excitation électrique de la résonance est périodiquement interrompue le temps nécessaire jusqu'à ce que les particules coagulées dans les zones de ventres de vitesse (11) ou de noeuds de vitesse (12) soient précipitées par la gravité.

11. Procédé selon la revendication 10, caractérisé en ce que, pendant la durée de l'interruption de l'excitation électrique de la résonance, la circulation est interrompue.

12. Dispositif pour la mise en oeuvre du procédé selon l'une quelconque des revendications 1 à 11, pour la séparation de particules dispersées (1) par excitation sonore de la dispersion (2) avec des ondes ultrasonores stationnaires (3) dans un résonateur composé (4), qui contient un dispositif d'excitation sonore (5), qui est constitué d'au moins d'un élément (6) excité électriquement avec une fréquence dans les environs de la fréquence caractéristique ($f_0$), susceptible de vibrations mécaniques et couplé de manière acoustique avec un récipient (8) contenant la dispersion (2), qui présente un système de miroirs acoustiques (9) constitué de un ou plusieurs miroirs acoustiques (9a, 9b, ...), qui réfléchissent les ondes sonores, ce qui permet la formation d'ondes sonores stationnaires (3), qui engendrent des forces de rayonnement sonore sur les particules dispersées (1) dans la direction longitudinale (10) des ondes stationnaires (3), chassant les particules (1) dans les zones de ventres de vitesse (11) ou de noeuds de vitesse (12) du champs sonore stationnaire (3) et les y retenant (force de retenue longitudinale), et avec des moyens de réglage de la fréquence d'excitation électrique du résonateur (4), caractérisé en ce qu'on prévoit des moyens de déplacement lent du dispositif d'excitation sonore (5, 5') par rapport au récipient (8) de préférence perpendiculairement à la direction de circulation (55).

13. Dispositif selon la revendication 12, caractérisé en ce que le couplage acoustique entre le dispositif d'excitation sonore (5,5') et le récipient (8) se fait par un film de liquide (7), dont l'épaisseur est essentiellement plus petite qu'un quart de la longueur d'onde dans le film de liquide (7) pour la fréquence d'excitation ($f_n$).

**14.** Dispositif selon la revendication 12 ou 13, caractérisé en ce que le récipient (8) contenant la dispersion (2) possède des parois acoustiquement transparentes (parois non réfléchissantes) (46) et que ce récipient (8) est déplacé par rapport au champs sonore, qui est produit dans un autre récipient (8') contenant un liquide de couplage (56).

**15.** Dispositif pour la mise en oeuvre du procédé selon l'une quelconque des revendications 1 à 11, pour la séparation de particules dispersées (1) par excitation sonore de la dispersion (2) avec des ondes ultrasonores stationnaires (3) dans un résonateur composé (4), qui contient un dispositif d'excitation sonore (5), qui est constitué d'au moins d'un élément (6) excité électriquement avec une fréquence dans les environs de la fréquence caractéristique ($f_0$), susceptible de vibrations mécaniques et qui est couplé de manière acoustique avec un récipient (8) contenant la dispersion (2), qui présente un système de miroirs acoustiques (9) constitué de un ou plusieurs miroirs acoustiques (9a, 9b, ...), qui réfléchissent les ondes sonores, ce qui permet la formation d'ondes sonores stationnaires (3), qui engendrent des forces de rayonnement sonore sur les particules dispersées (1) dans la direction longitudinale (10) des ondes stationnaires (3), chassant les particules (1) dans les zones de ventres de vitesse (11) ou de noeuds de vitesse (12) du champs sonore stationnaire (3) et les y retenant (force de retenue longitudinale), et avec des moyens de réglage de la fréquence d'excitation électrique du résonateur (4), caractérisé en ce que le résonateur composé (4) est subdivisé dans la direction longitudinale en une ou plusieurs zones de séparation (S) et en une ou plusieurs zones de guide d'ondes (W), qu'au moyen d'un circuit électronique (FG), la fréquence de commande du résonateur composé (4) est augmentée ou diminuée pas à pas à partir d'une fréquence de résonance minimale ou maximale ($f_{min}$, $f_{max}$) chaque fois d'une fréquence de résonance ($f_n$) à la fréquence de résonance la plus proche ($f_{n+1}$) jusqu'à ce qu'une fréquence de résonance maximale ou minimale ($f_{max}$, $f_{min}$) soit atteinte; que pendant un temps mort ($t_T$), qui est très court par rapport à la durée d'action $\Delta t_n$ de la fréquence respective ($f_n$), on rétrograde de nouveau à la fréquence de départ ($f_{min}$, $f_{max}$); le scénario est répété de manière cyclique et la situation et la longueur ($d_S$) de chaque zone de séparation au sein de la longueur totale (L) du résonateur composé (4) est choisie de telle manière que, pour chaque pas de fréquence ($f_n \rightarrow f_{n+1}$), le plus grand déplacement ($\delta$) d'une zone de ventres de vitesse au sein de la zone de séparation (S) reste toujours plus petit qu'un quart, de préférence un sixième, de la longueur d'onde de départ ($\lambda_n$) respective et le plus grand déplacement ($\Delta$) d'une zone de ventres de vitesse sonore (11) à l'intérieur de la zone de séparation (S), et correspondant à la plage totale de fréquence ($f_{max}$-$f_{min}$), soit plus grand qu'un quart de la longueur d'onde moyenne ($\lambda_{max}/4$).

**16.** Dispositif selon la revendication 15, caractérisé en ce que deux zones de séparation (S, S'), disposées de préférence de manière symétrique par rapport à l'axe de symétrie (57), et trois zones de guide d'ondes ($W_a$, $W_b$, $W_{b'}$) sont formées, dont une zone de guide d'ondes ($W_a$) se trouve au milieu (57) entre les zones de séparation et les deux autres zones de guide d'ondes ($W_b$, $W_{b'}$) se trouvent aux extrémités (53) du résonateur composé (4).

**17.** Dispositif selon la revendication 15, caractérisé en ce que l'unité d'excitation sonore (5) est contenue dans la zone de guide d'ondes du milieu ou forme celle-ci.

**18.** Dispositif selon l'une quelconque des revendications 15 à 17, caractérisé en ce que la zone de guide d'onde ($W_a$) du milieu est formée d'une zone de liquide (56) composée de préférence du milieu de dispersion, et est délimitée à une ou aux deux extrémités par des parois (54) acoustiquement transparentes.

**19.** Dispositif selon l'une quelconque des revendications 15 à 18, caractérisé en ce qu'une, ou deux, des zones de guide d'ondes ($W_b$, $W_{b'}$) disposées aux extrémités est formée d'une zone de liquide (56) composée de préférence du milieu de dispersion, qui est limitée à l'extrémité interne par une paroi acoustiquement transparente (54) et à l'extrémité externe par un miroir acoustique (9).

**20.** Dispositif selon l'une quelconque des revendications 14, 18 ou 19, caractérisé en ce que les parois acoustiquement transparentes (46, 54) ont une épaisseur d'une demi ou d'un multiple entier d'une demi-longueur d'onde ($\lambda_G/2$) dans le matériau mural pour la fréquence d'excitation moyenne ($f_m$).

**21.** Dispositif selon l'une quelconque des revendications 14 ou 20, caractérisé en ce que les parois acoustiquement transparentes (46) sont constituées d'un matériau dont l'impédance acoustique caractéristique ($z_W$) se différencie le moins possible de l'impédance acoustique caractéristique ($z_D$) de la dispersion (2,2').

**22.** Dispositif selon l'une quelconque des revendications 14 à 21, caractérisé en ce que les parois acoustiquement transparentes (46) sont constituées d'un matériau interne d'épaisseur quelconque dont l'impédance acoustique caractéristique ($z_W$) est adaptée, du côté dirigé vers la dispersion (2,2'), à l'impédance acoustique caractéristique ($z_D$) de la dispersion (2,2') par une couche de transformation de λ/4 qui y est directement attachée, alors que du côté dirigé vers le liquide de couplage (7,56), elle est adaptée à l'impédance acoustique caractéristique ($z_K$) du liquide de couplage (7,56) par une couche de transformation de λ/4 qui y est directement attachée.

**23.** Dispositif selon la revendication 15 et l'une quelconque des revendications 16 à 22, caractérisé en ce que la longueur acoustique ($d_{Wa}$) de la zone de guide d'ondes du milieu ($W_a$) est choisie à peu près égale à un tiers de la longueur acoustique (L) du résonateur composé (4).

**24.** Dispositif selon la revendication 15 et l'une quelconque des revendications 16 à 23, caractérisé en ce que les zones de guide d'ondes ($W_b, W_{b'}$) disposées aux extrémités sont constituées uniquement des parois elles-mêmes du récipient formées comme des miroirs acoustiques (9).

**25.** Dispositif selon la revendication 15 et l'une quelconque des revendications 16 à 22, caractérisé en ce que la zone de guide d'ondes du milieu($W_a$) est formée uniquement du dispositif d'excitation sonore (5) lui-même.

**26.** Dispositif selon la revendication 15 et l'une quelconque des revendications 16 à 22 ou 25, caractérisé en ce que les longueurs acoustiques ($d_{Wb}, d_{Wb'}$) des zones de guide d'ondes ($W_b, W_{b'}$) disposées aux extrémités sont choisies à peu près égales à un sixième de la longueur acoustique (L) du résonateur composé (4).

**27.** Dispositif selon l'une quelconque des revendications 15 à 26, caractérisé en ce que la fréquence de résonance de départ ($f_{min}$) est choisie plus petite et la fréquence de résonance maximale ($f_{max}$) plus grande qu'une fréquence de résonance ($f_K$) du dispositif d'excitation sonore (5).

**28.** Dispositif selon la revendication 27, caractérisé en ce que la fréquence de résonance moyenne ($f_m$) est choisie égale à une fréquence de résonance ($f_K$) du dispositif d'excitation sonore (5).

**29.** Dispositif selon l'une quelconque des revendications 15 à 28, caractérisé en ce que les zones de séparation (S, S') sont traversées essentiellement de manière perpendiculaire à la direction de propagation (10) de l'onde par la dispersion (2).

**30.** Dispositif selon la revendication 29, caractérisé en ce que la vitesse de circulation est choisie de telle sorte que le temps de séjour de la dispersion (2,2') dans la zone de séparation excitée (S) est plus grand que la durée de la période (T) de l'évolution dans le temps de la fréquence d'excitation (f).

**31.** Dispositif pour la mise en oeuvre du procédé selon l'une quelconque des revendications 1 à 11, pour la séparation de particules dispersées (1) par excitation sonore de la dispersion (2) avec des ondes ultrasonores stationnaires (3) dans un résonateur composé (4), qui contient un dispositif d'excitation sonore (5), constitué d'au moins d'un élément (6) excité électriquement avec une fréquence dans les environs de la fréquence caractéristique ($f_0$), susceptible de vibrations mécaniques et qui est couplé de manière acoustique avec un récipient (8) contenant la dispersion (2), qui présente un système de miroirs acoustiques (9) constitué de un ou plusieurs miroirs acoustiques (9a, 9b, ...), qui réfléchissent les ondes sonores, ce qui permet la formation d'ondes sonores stationnaires (3), qui engendrent des forces de rayonnement sonore sur les particules dispersées (1) dans la direction longitudinale (10) des ondes stationnaires (3), chassant les particules (1) dans les zones de ventres de vitesse (11) ou de noeuds de vitesse (12) des champs sonores stationnaires (3) et les y retenant (force de retenue longitudinale), et avec des moyens de réglage de la fréquence d'excitation électrique du résonateur (4), caractérisé en ce que le résonateur composé est formé d'un résonateur annulaire (4'), qui contient un ou plusieurs dispositifs d'excitation sonore (34, 35).

**32.** Dispositif selon la revendication 31, caractérisé en ce que le résonateur annulaire (4') contient aussi bien un premier dispositif d'excitation sonore unidirectionnel (34), qui produit une première onde de résonance circulaire de la fréquence ($f_1$), qu'un second dispositif d'excitation sonore unidirectionnel (35), qui produit une seconde onde de résonance circulaire de la fréquence ($f_2$) dans la direction opposée (37), les deux fréquences ($f_1$, $f_2$) se différenciant très peu.

**33.** Dispositif selon l'une quelconque des revendications 31 ou 32, caractérisé en ce que le dispositif d'excitation sonore unidirectionnel (34, 35) est composé d'un noyau de résonateur-sandwich piézoélectrique, d'une épaisseur totale (d) et composé de N plaques piézoélectriques (40), qui, de préférence, présentent chacune une épaisseur (d/N), égale à celle de la N-ème partie de l'épaisseur totale (d), où les plaques (40) présentent chacune des électrodes de chaque côté (43), qui sont commandées par des tensions périodiques ($u_i$), dont les déphasages dans le temps ($\phi_i$) sont égaux aux déphasages locaux correspondants ($\psi_i$) de l'onde sonore ($V_i$) dans les plaques (40) qui est engendrée par les vibrations acoustiques (36,37) produites par le dispositif d'excitation sonore (34,35).

**34.** Dispositif selon la revendication 33, caractérisé en ce que des couches de transformation de $\lambda/4$ (41, 41') sont raccordées au noyau du résonateur-sandwich, et permettent d'ajuster l'impédance acoustique caractéristique ($z_A$) du matériau des plaques du côté dirigé vers la dispersion (2) à l'impédance acoustique caractéristique ($z_D$) de la dispersion (2) et de l'ajuster du côté dirigé vers le liquide de couplage (56) à l'impédance acoustique caractéristique ($z_K$) du liquide de couplage.

**35.** Dispositif selon la revendication 33, caractérisé en ce que le noyau du résonateur-sandwich piézoélectrique présente une épaisseur totale (d) égale à la demi-longueur d'onde ($\lambda_A/2$) ou à un multiple entier de la demi-longueur d'onde ($k\lambda_A/2$) de l'onde sonore (36,37) émise par ce dispositif d'excitation sonore unidirectionnel (34,35).

**36.** Dispositif selon la revendication 35, caractérisé en ce qu'une couche (41,41') de transformation de $\lambda/4$ est raccordée sur un des deux côtés au noyau du résonateur-sandwich, et permet d'ajuster l'impédance acoustique caractéristique ($z_D$) de la dispersion (2) à l'impédance acoustique caractéristique ($z_K$) du liquide de couplage (56).

**37.** Dispositif selon la revendication 31, caractérisé en ce que le résonateur annulaire (4') contient un dispositif d'excitation sonore (34), constitué d'au moins deux plaques piézoélectriques (47,48), qui présentent des épaisseurs ($D_1$, $D_2$) égales à la demi-longueur d'onde ($\lambda_A/2$) ou à un multiple entier de la demi-longueur d'onde ($k\lambda_A/2$) de l'onde sonore (36, 37) émise par ce dispositif d'excitation sonore (34), qui sont de préférence d'épaisseur égale et présentent une distance ($D_F$) entre elles remplie avec un matériau de remplissage (49), qui est de préférence le milieu de dispersion (2), et qui est égale à un quart de longueur d'onde ou à un multiple impair d'un quart de longueur d'onde ($k_1\lambda_F/4$) dans le matériau de remplissage, et pour lequel les plaques piézoélectriques (47, 48) présentent chacune des électrodes (43) de chaque côté, qui sont commandées par des tensions alternatives ($u_1$, $u_2$), qui présentent des modulations d'amplitude périodiques avec un déphasage mutuel dans le temps ($\Phi$), qui est égal à $\pi/2$ ou à un multiple impair de $\pi/2$ ($k_2\pi/2$).

**38.** Dispositif selon la revendication 31, caractérisé en ce que les miroirs acoustiques (9) sont disposés de telle manière que la déviation de l'onde circulaire de résonance dans le résonateur se produit par la réflexion totale.

**39.** Dispositif selon l'une quelconque des revendications 12 à 30, caractérisé en ce que le résonateur (4) est muni de deux dispositifs d'excitation sonores (5, 5'), dont les directions d'excitation sonore forment de préférence entre elles un angle de 90°.

**40.** Dispositif selon l'une quelconque des revendications 12 à 30, caractérisé en ce qu'un seul dispositif d'excitation sonore (5) est prévu, qui émet une onde sonore dans une première direction, laquelle produit des ondes sonores par un système de miroirs acoustiques (9), et qui forment de préférence un angle de 90° avec la première direction.

**41.** Dispositif selon l'une quelconque des revendications 12 à 30, caractérisé en ce que le résonateur (4) est muni de trois dispositifs d'excitation sonores, dont les directions d'excitation sonore font de préférence entre elles des angles de 90°.

42. Dispositif selon l'une quelconque des revendications 12 à 41, caractérisé en ce que le miroir acoustique (9) est constitué d'une plaque avec des surfaces planes et parallèles, que le matériau de la plaque présente une impédance acoustique caractéristique la plus élevée possible par rapport à la dispersion, et que l'épaisseur de la plaque est, de préférence, égale à un quart ou à un multiple impair d'un quart de la longueur d'onde ($\lambda$) dans la plaque.

43. Dispositif selon l'une quelconque des revendications 12 à 30, caractérisé en ce que le miroir acoustique (9) est constitué d'une ou plusieurs surfaces de réflexion (51), qui présentent un angle de 90° ± 5° l'une par rapport à l'autre et qui sont orientées par rapport au rayon incident (52) de telle manière que l'angle d'incidence $\theta_e$ du rayon (52) sur les surfaces de réflexion (51) soit de 45° ± 5° et sont constituées d'un matériau, dont les propriétés satisfont aux conditions de réflexion totale pour les ondes transversales $\theta_s < \theta_e$ et pour les ondes longitudinales $\theta_l < \theta_e$

44. Dispositif selon l'une quelconque des revendications 12 à 43, caractérisé en ce que les miroirs acoustiques (9) remplissent en même temps les fonctions de parois du récipient ou font partie des parois du récipient.

45. Dispositif selon l'une quelconque des revendications 12 à 30, caractérisé en ce qu'une succession de zones (18) d'interférence constructive alternant avec des zones (17) d'interférence destructive est produite par l'insertion d'une plaque de phase (20), qui est disposée de préférence perpendiculairement à la direction longitudinale (10) de l'onde stationnaire (3), la plaque de phase (20) présentant des zones d'épaisseurs différentes dont les valeurs ($d_1$) et ($d_2$) se différencient d'une grandeur provoquant un déphasage de l'onde (3) traversant ces zones d'épaisseurs différentes, d'environ $\pi/4$ ou un multiple impair de $\pi/4$ et dont la plus petite épaisseur ($d_1$) est de préférence égale à un quart ou à un multiple entier d'un quart de la longueur d'onde dans la plaque (20).

46. Dispositif selon la revendication 45, caractérisé en ce que la plaque de phase (20) forme une paroi du récipient faisant office de miroir acoustique ou forme une partie d'une telle paroi du récipient.

47. Dispositif selon l'une quelconque des revendications 12 à 30, 39 ou 40, caractérisé en ce qu'une formation d'un gradient prononcé de l'amplitude de la vibration (V) est obtenue à l'intérieur des zones des ventres de vitesse (11) ou des noeuds de vitesse (12) par un dispositif d'excitation sonore (5), dont la courbe locale d'amplitude présente des maxima et des minima dans la direction transversale.

48. Dispositif selon l'une quelconque des revendications 12 à 47, caractérisé en ce que l'élément (6) excité électriquement, susceptible de vibrations mécaniques est un résonateur piézoélectrique (6').

49. Dispositif selon la revendication 48, caractérisé en ce qu'il est prévu un résonateur piézoélectrique (6') en forme de plaque avec des surfaces de plaque planes et parallèles (résonateur à plans parallèles).

50. Dispositif selon la revendication 48, caractérisé en ce qu'il est prévu un résonateur piézoélectrique (6'') en forme de plaque avec une surface de plaque plane et une autre courbe convexe (résonateur plan-convexe).

51. Dispositif selon l'une quelconque des revendications 48 à 50, caractérisé en ce que le résonateur piézoélectrique (6', 6'') est excité sur une fréquence de résonance anharmonique.

52. Dispositif selon la revendication 51, caractérisé en ce que la capacité d'excitation électrique de la fréquence de résonance anharmonique est augmentée par la division des surfaces d'électrodes en surfaces partielles (21, 22), et que la situation et la grandeur des surfaces partielles (21, 22) sont choisies de telle sorte qu'elle s'accordent à la situation et à la grandeur des zones de vibration du mode de vibration anharmonique souhaité et que l'alimentation électrique des électrodes appartenant aux zones de vibration en opposition de phase a lieu en opposition de phase électrique.

53. Dispositif selon l'une quelconque des revendications 12 à 52, caractérisé en ce que le récipient (8) possède une ouverture d'entrée (27), par laquelle la dispersion à traiter (A) peut pénétrer, et une ouverture de sortie (28) par laquelle le milieu de dispersion (C) peut s'écouler, de telle manière que la dispersion (2) peut traverser le récipient (8) essentiellement de manière perpendiculaire à la direction longitudinale (10) et que les particules (1) sont retenues et concentrées dans les zones de ventres de vitesse (11) ou de noeuds de vitesse (12).

54. Dispositif selon l'une quelconque des revendications 12 à 53, caractérisé en ce que la fréquence de commande électrique du dispositif d'excitation sonore (4) est syntonisée sur une fréquence de résonance du résonateur composé (4).

55. Dispositif selon la revendication 54, caractérisé par des moyens de syntonisation sur une fréquence de résonance naturelle du résonateur composé (4) pour laquelle la puissance absorbée du dispositif d'excitation sonore (5) présente un maximum relatif.

56. Dispositif selon la revendication 54, caractérisé par des moyens de syntonisation sur une fréquence de résonance en série du résonateur pour laquelle, pour une alimentation à faible résistance par comparaison à l'impédance du résonateur, la consommation en courant du dispositif d'excitation sonore (5) présente un maximum relatif.

57. Dispositif selon la revendication 54, caractérisé par des moyens de syntonisation sur une fréquence de résonance en parallèle du résonateur pour laquelle pour une alimentation à résistance extrèmement élevée la tension électrique au dispositif d'excitation sonore (5) présente un maximum relatif.

58. Dispositif selon l'une quelconque des revendications 54 à 57, caractérisé en ce que la syntonisation sur le maximum relatif a lieu par le réglage automatique de la fréquence de commande électrique sur le maximum relatif.

59. Dispositif selon l'une quelconque des revendications 54 à 57, caractérisé en ce que la syntonisation sur une fréquence de résonance du résonateur a lieu par l'intégration de l'impédance électrique aux raccordements électriques du dispositif d'excitation sonore (5) comme élément de filtre passe-bande pour déterminer les amplitudes et les phases, dans le circuit de couplage d'un circuit oscillant.

60. Dispositif selon l'une quelconque des revendications 57 ou 59, caractérisé en ce qu'on prévoit un circuit oscillant, qui contient un dispositif de réglage de l'amplitude de la tension qui s'établit à la fréquence de résonance d'excitation, aux raccordements électriques du dispositif d'excitation sonore (5).

61. Dispositif selon l'une quelconque des revendications 57 ou 59, caractérisé en ce qu'on prévoit un circuit oscillant, qui contient un dispositif de réglage de l'amplitude du courant absorbé, à la fréquence de résonance d'excitation, aux raccordements électriques du dispositif d'excitation sonore (5).

Fig. 1

Fig. 2

Fig. 3

Fig. 4

Fig. 5

Fig. 6

Fig. 7

Fig. 8

Fig. 9

Fig. 10

Fig. 11

Fig. 12

FIG.13

Fig. 14

Fig. 15

Fig. 16

Fig. 17

Fig.18